# EUROPEAN PATENT SPECIFICATION

(11) **EP 2 859 768 B1**
(45) Date of publication and mention of the grant of the patent: **18.10.2017**
(21) Application number: 13729546.5
(22) Date of filing: 29.05.2013
(51) Int. Cl.: H04W 72/12

(54) **COOPERATIVE APPLICATIONS IN COMMUNICATION SYSTEMS**
KOOPERATIVE ANWENDUNGEN IN KOMMUNIKATIONSSYSTEMEN
APPLICATIONS COLLABORATIVES DANS DES SYSTÈMES DE COMMUNICATION

(30) Priority: 12.06.2012 US 201261658774 P; 16.10.2012 US 201213653239
(43) Date of publication of application: 15.04.2015
(60) Divisional application: 17190675.3
(73) Proprietor: Taiwan Semiconductor Manufacturing Company, Ltd., Hsinchu 300-78 (TW)
(72) Inventor: STANWOOD, Kenneth L., San Diego, California 92128 (US); GELL, David, San Diego, California 92128 (US); BAO, Yiliang, San Diego, California 92128 (US); RODDY, Warren, San Diego, California 92128 (US)
(74) Representative: FRKelly
(86) International application number: PCT/US2013/043042
(87) International publication number: WO 2013/188105

(56) References cited:
- WO-A2-02/073366
- GB-A- 2 481 659
- US-A1- 2007 268 860
- US-A1- 2010 002 692
- AHMED ALOUI ET AL: "Architecture for mobile business based on mobile agent", MULTIMEDIA COMPUTING AND SYSTEMS (ICMCS), 2012 INTERNATIONAL CONFERENCE ON, IEEE, 10 May 2012 (2012-05-10), pages 954-958, XP032259040, DOI: 10.1109/ICMCS.2012.6320180 ISBN: 978-1-4673-1518-0

## Description

### BACKGROUND

The present invention generally relates to the field of communication systems and to systems and methods for cooperative applications in communication systems.

In a communication network, such as an Internet Protocol (IP) network, each node and subnet has limitations on the amount of data that can be effectively transported at any given time. In a wired network, this is often a function of equipment capability. For example, a gigabit Ethernet link can transport no more than 1 billion bits of traffic per second. In a wireless network the capacity is limited by the channel bandwidth, the transmission technology, and the communication protocols used. A wireless network is further constrained by the amount of spectrum allocated to a service area and the quality of the signal between the sending and receiving systems. Because these aspects can be dynamic, the capacity of a wireless system may vary over time.

Historically, communication systems have segregated traffic by classes of service (CoS) in the core, such as in a packet gateway (P-GW) in an LTE system. This has the benefit that operator provided services such as voice and video from the operator's own or coordinated content delivery network (CDN) are able to be given quality of service (QoS) guarantees such as guaranteed bit rates (GBR). Traffic not associated with operator provided services is typically less differentiated, leading to heterogeneous traffic grouped into the same CoS. Further, this traffic is often provided resources on a best effort basis, ignoring the QoS needs of the specific application generating the traffic, and ignoring the quality of experience (QoE) perceived by the end user.

Additional communication traffic may be from over-the-top (OTT) services, that is, services that are not operator provided or coordinated. Skype voice over internet protocol (VoIP), YouTube progressive download video, Netflix streaming video, and Pandora radio streaming audio are examples of OTT services. OTT voice and video services tend to be grouped together as best effort traffic along with email, social networking, and file transfer. When a network becomes congested, the OTT services are typically all treated the same regardless of the impact in perceived quality by the end user. They are typically scheduled as the same CoS. Additionally, OTT services are typically grouped into the same logical bearer. In today's communications systems, admission control is performed on a logical bearer basis without regard to the mix of services on the bearer. Consequently, real-time services such as voice, streaming video, and streaming audio are perceived to have a substantial degradation in QoE relative to non-real-time services such as email.

US2007268860 relates to optimal allocation of a number of sub carriers to applications having diverse QoS requirements and executing on terminal devices (e.g., mobile stations). A base station (BS) considers the QoS requirements and the observed QoS for each of the applications in computing the number of sub carriers allocated to each terminal device in the forward link direction in a given time slot. For allocation in the reverse link direction, the terminal device transmits a first bit indicating whether the aggregate queue lengths (of all applications) exceeds a pre-specified threshold and a second bit indicating whether a delay bound requirement is likely to be violated in the absence of sub carrier allocation. The BS computes the number of sub carriers to be allocated in the reverse link direction based on the respective two bits received from the terminal devices.

US2010002692 relates to methods and apparatus for associating each data packet in a media stream with logic corresponding to a particular quality-of-service (QoS) and/or error correction requirement. In an exemplary embodiment, each packet in the media stream is assigned a frame tag which designates a particular quality-of-service and/or error correction scheme for the corresponding packet. At least a portion of each packet is encoded according to the packet's designated quality-of-service as indicated by the frame tag. A receiver accesses the frame tags from within the transmitted media stream in order to determine the appropriate means for processing or decoding the encoded portion of each packet.; In this manner, each packet within the media stream can have its own quality-of-service and/or error correction requirements and processing, thereby enhancing link efficiency and better enforcing QoS policy across the system.

### SUMMARY

The present invention is defined in the appended independent claims 1 and 9. Advantageous features are defined in the dependent claims.

Other features and advantages of the present invention should be apparent from the following description which illustrates, by way of example, aspects of the invention.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 is a block diagram of a communication network in which systems and methods disclosed herein can be implemented in accordance with aspects of the invention;
FIG. 2 is a block diagram of an access node in accordance with aspects of the invention;
FIG. 3 is a block diagram of a terminal node in accordance with aspects of the invention;
FIG. 4 is a diagram illustrating aspects of an access node in accordance with aspects of the invention;
FIG. 5 is a block diagram of a communication system that shows control plane relationships in accordance with aspects of the invention;
FIG. 6 is a block diagram of application agents and applications in accordance with aspects of the invention;
FIG. 7 is a block diagram of a communication system with application agents and applications in accordance with aspects of the invention;
FIG. 8 is a block diagram of another communication system with application agents and applications in accordance with aspects of the invention; and
FIG. 9 is a block diagram of a packet inspection module in accordance with aspects of the invention.

### DETAILED DESCRIPTION

Systems and methods for communication systems having scheduling and admission control functions that are aware of application needs are provided. Cooperation and communication between user equipment applications and application-aware base stations (or other network nodes) can improver users' quality of experience (QoE). The systems and method are particularly useful in capacity and spectrum constrained, multiple-access communication systems. The systems and methods disclosed herein can be used with classes of service that contain data streams or flows from heterogeneous applications.

The systems and methods disclosed herein can be applied to various capacity-limited communication systems, including wireline and wireless technologies. For example, the systems and methods disclosed herein can be used with Cellular 2G, 3G, 4G (including Long Term Evolution (LTE), LTE Advanced, and WiMAX), cellular backhaul, Wi-Fi, Ultra Mobile Broadband (UMB), cable modem, and other point-to-point or point-to-multipoint wireline or wireless technologies. For concise exposition, various embodiments are described using terminology and organization of particular technologies and standards. However, the systems and methods described herein are broadly applicable to other technologies and standards.

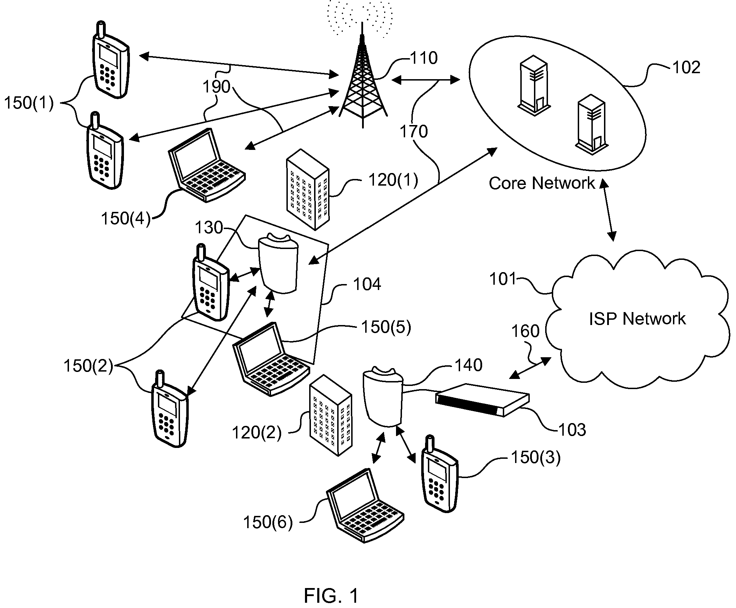

FIG. 1 is a block diagram of a communication network in which systems and methods disclosed herein can be implemented in accordance with aspects of the invention. A macro base station 110 is connected to a core network 102 through a backhaul connection 170. In an embodiment, the backhaul connection 170 is a bidirectional link or two unidirectional links. The direction from the core network 102 to the macro base station 110 is referred to as the downstream or downlink (DL) direction. The direction from the macro base station 110 to the core network 102 is referred to as the upstream or uplink (UL) direction. Subscriber stations 150(1) and 150(4) can connect to the core network 102 through the macro base station 110. Wireless links 190 between subscriber stations 150 and the macro base station 110 are bidirectional point-to-multipoint links, in an embodiment. The direction of the wireless links 190 from the macro base station 110 to the subscriber stations 150 is referred to as the downlink or downstream direction. The direction of the wireless links 190 from the subscriber stations 150 to the macro base station 110 is referred to as the uplink or upstream direction. Subscriber stations are sometimes referred to as user equipment (UE), users, user devices, handsets, terminal nodes, or user terminals and are often mobile devices such as smart phones or tablets. The subscriber stations 150 access content over the wireless links 190 using base stations, such as the macro base station 110, as a bridge. That is to say, the base stations generally pass user application data and any user application control messages between the subscriber stations 150 and the core network 102 without the base station being a destination for the data and control messages or a source of the data and control messages.

In the network configuration illustrated in FIG. 1, an office building 120(1) causes a coverage shadow 104. A pico station 130 can provide coverage to subscriber stations 150(2) and 150(5) in the coverage shadow 104. The pico station 130 is connected to the core network 102 via a backhaul connection 170. The subscriber stations 150(2) and 150(5) may be connected to the pico station 130 via links that are similar to or the same as the wireless links 190 between subscriber stations 150(1) and 150(4) and the macro base station 110.

In office building 120(2), an enterprise femtocell 140 provides in-building coverage to subscriber stations 150(3) and 150(6). The enterprise femtocell 140 can connect to the core network 102 via an internet service provider network 101 by utilizing a broadband connection 160 provided by an enterprise gateway 103.

To aid in allocating scarce communication resources, prior communication systems have segregated traffic by classes of service (CoS) in the core network, such as in a packet gateway (P-GW) in an LTE system. Traffic within a CoS is often treated similarly for the purpose of scheduling resource allocations. Traffic in different CoS is often treated separately for the purpose of scheduling resource allocations. This allows operator provided services, such as voice and video from the operator's own or coordinated content delivery network (CDN), to be given QoS guarantees such as guaranteed bit rates (GBR).

Traffic not associated with operator provided services may be referred to as over-the-top (OTT) traffic. Prior systems typically have little or no differentiation between various types of OTT traffic. Thus, heterogeneous traffic may be grouped into the same CoS. Further, this traffic is often provided resources on a best effort basis with, for example, no guaranteed bit rates. Thus, prior systems ignore QoS needs of the specific application generating the OTT traffic and ignore the quality of experience (QoE) perceived by the end user. In particular, OTT voice and video services such as Skype voice over IP (VoIP), YouTube progressive download video, Netflix streaming video, Facetime conversational video, and Pandora radio streaming audio may have been grouped together as best effort traffic along with email, social networking, and file transfer. When the network becomes congested, these services are typically all treated the same regardless of the impact in perceived quality by the user. Consequently, real-time services (for example, voice, streaming video, and streaming audio) are perceived to have a substantial degradation in QoE relative to non-real-time services (for example, email).

The subscriber stations 150 and communication nodes in the network of FIG. 1 (such as the macro base station 110, the pico station 130, the enterprise gateway 103, the enterprise femtocell 140, devices in the core network 102, and devices in the internet service provider network 101) may communicate application related information. Cooperation between applications in the subscriber stations and application agents in the communication nodes can improve performance of the communication network including the user experience. The application related information can be derived through the inspection of packets passing through the communication nodes. For many applications there may be additional information, such as client side buffer occupancy, residing in an application in a subscriber station that may allow for more efficient or improved communications. Similarly, there may be information, such as congestion state information, available in a communication node, that could aid an application in making more intelligent resource requests which would, in turn, lead to improved performance by the communication node, for example, in scheduler and admission control functions. For example, the communication system may use application information and congestion information to improve communication channel resource allocation and to determine which sessions to admit, deny, or modify.

Application related communication or cooperation between client side applications and communication node scheduling and admission control functions can improve QoE for users. Application related communication and cooperation can improve QoE even when QoS resource guarantees are available. For example, the resource guarantees may not comprehend instantaneous conditions such as congestion, peak versus average bit rates, and heterogeneity of data between applications.

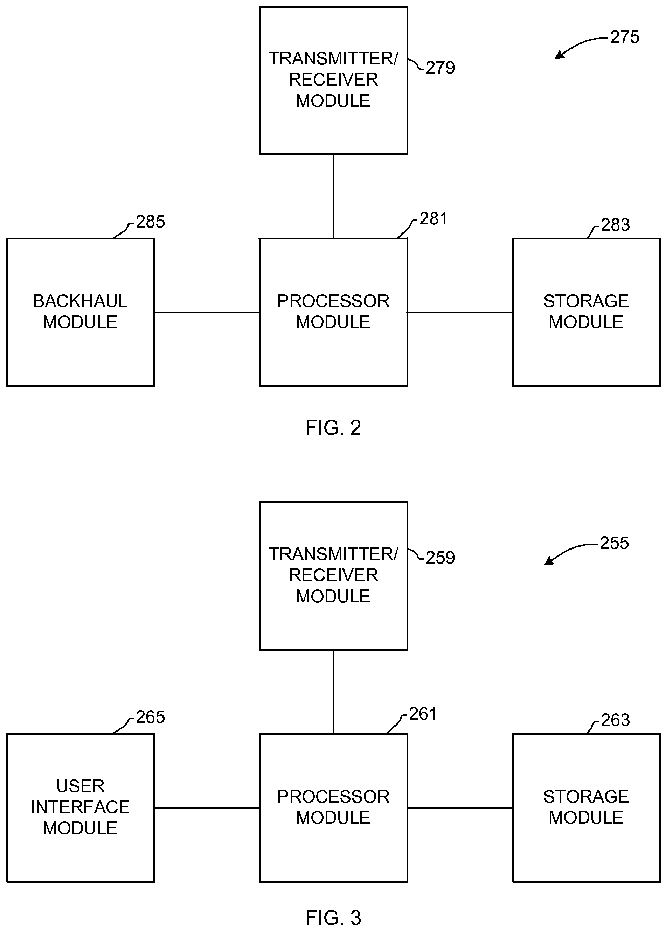

FIG. 2 is a functional block diagram of an access node 275 in accordance with aspects of the invention. In various embodiments, the access node 275 may be a mobile WiMAX base station, a global system for mobile (GSM) wireless base transceiver station (BTS), a Universal Mobile Telecommunications System (UMTS) NodeB, an LTE evolved Node B (eNB or eNodeB), a cable modem head end, or other wireline or wireless access node of various form factors. For example, the macro base station 110, the pico station 130, or the enterprise femtocell 140 of FIG. 1 may be provided, for example, by the access node 275 of FIG. 2. The access node 275 includes a processor module 281. The processor module 281 is coupled to a transmitter-receiver (transceiver) module 279, a backhaul interface module 285, and a storage module 283.

The transmitter-receiver module 279 is configured to transmit and receive communications with other devices. In many embodiments, the communications are transmitted and received wirelessly. In such embodiments, the access node 275 generally includes one or more antennae for transmission and reception of radio signals. In other embodiments, the communications are transmitted and received over physical connections such as wires or optical cables. The communications of the transmitter-receiver module 279 may be with terminal nodes.

The backhaul interface module 285 provides communication between the access node 275 and a core network. The communication may be over a backhaul connection, for example, the backhaul connection 170 of FIG. 1. Communications received via the transmitter-receiver module 279 may be transmitted, after processing, on the backhaul connection. Similarly, communication received from the backhaul connection may be transmitted by the transmitter-receiver module 279. Although the access node 275 of FIG. 2 is shown with a single backhaul interface module 285, other embodiments of the access node 275 may include multiple backhaul interface modules. Similarly, the access node 275 may include multiple transmitter-receiver modules. The multiple backhaul interface modules and transmitter-receiver modules may operate according to different protocols.

The processor module 281 can process communications being received and transmitted by the access node 275. The storage module 283 stores data for use by the processor module 281. The storage module 283 may also be used to store computer readable instructions for execution by the processor module 281. The computer readable instructions can be used by the access node 275 for accomplishing the various functions of the access node 275. In an embodiment, the storage module 283 or parts of the storage module 283 may be considered a non-transitory machine readable medium. For concise explanation, the access node 275 or embodiments of it are described as having certain functionality. It will be appreciated that in some embodiments, this functionality is accomplished by the processor module 281 in conjunction with the storage module 283, transmitter-receiver module 279, and backhaul interface module 285. Furthermore, in addition to executing instructions, the processor module 281 may include specific purpose hardware to accomplish some functions.

The access node 275 may communicate application related information with other devices. The access node 275 may receive application related information from other devices, transmit application related information to other devices, or both. For example, an application in a terminal node may cooperatively operate with the access node 275 to improve QoE for the user of the terminal node.

FIG. 3 is a functional block diagram of a terminal node 255 in accordance with aspects of the invention. In various embodiments, the terminal node 255 may be a mobile WiMAX subscriber station, a GSM cellular phone, a UMTS cellular phone, an LTE user equipment, a cable modem, or other wireline or wireless terminal node of various form factors. The subscriber stations 150 of FIG. 1 may be provided, for example, by the terminal node 255 of FIG. 3. The terminal node 255 includes a processor module 261. The processor module 261 is coupled to a transmitter-receiver module (transceiver) 259, a user interface module 265, and a storage module 263.

The transmitter-receiver module 259 is configured to transmit and receive communications with other devices. For example, the transmitter-receiver module 259 may communication with the access node 275 of FIG. 2 via its transmitter-receiver module 279. In embodiments where the communications are wireless, the terminal node 255 generally includes one or more antennae for transmission and reception of radio signals. In other embodiments, the communications are transmitted and received over physical connections such as wires or optical cables. Although the terminal node 255 of FIG. 3 is shown with a single transmitter-receiver module 259, other embodiments of the terminal node 255 may include multiple transmitter-receiver modules. The multiple transmitter-receiver modules may operate according to different protocols.

The terminal node 255, in many embodiments, provides data to and receives data from a person (user). Accordingly, the terminal node 255 includes the user interface module 265. The user interface module 265 includes modules for communicating with a person. The user interface module 265, in an embodiment, includes a speaker and a microphone for voice communications with the user, a screen for providing visual information to the user, and a keypad for accepting alphanumeric commands and data from the user. In some embodiments, a touch screen may be used in place of or in combination with the keypad to allow graphical inputs in addition to alphanumeric inputs. In an alternative embodiment, the user interface module 265 includes a computer interface, for example, a universal serial bus (USB) interface, to interface the terminal node 255 to a computer. For example, the terminal node 255 may be in the form of a dongle that can be connected to a notebook computer via the user interface module 265. The combination of computer and dongle may also be considered a terminal node. The user interface module 265 may have other configurations and include functions such as vibrators, cameras, and lights.

The processor module 261 can process communications being received and transmitted by the terminal node 255. The processor module 261 can also process inputs from and outputs to the user interface module 265. The storage module 263 stores data for use by the processor module 261. The storage module 263 may also be used to store computer readable instructions for execution by the processor module 261. The computer readable instructions can be used by the terminal node 255 for accomplishing the various functions of the terminal node 255. In an embodiment, the storage module 263 or parts of the storage module 263 may be considered a non-transitory machine readable medium. For concise explanation, the terminal node 255 or embodiments of it are described as having certain functionality. It will be appreciated that in some embodiments, this functionality is accomplished by the processor module 261 in conjunction with the storage module 263, the transmitter-receiver module 259, and the user interface module 265. Furthermore, in addition to executing instructions, the processor module 261 may include specific purpose hardware to accomplish some functions.

The terminal node 255 may communicate application related information with other devices. The terminal node 255 may receive application related information from other devices, transmit application related information to other devices, or both. For example, an application agent in an access node may cooperatively operate with the terminal node 255 to improve QoE for the user of the terminal node.

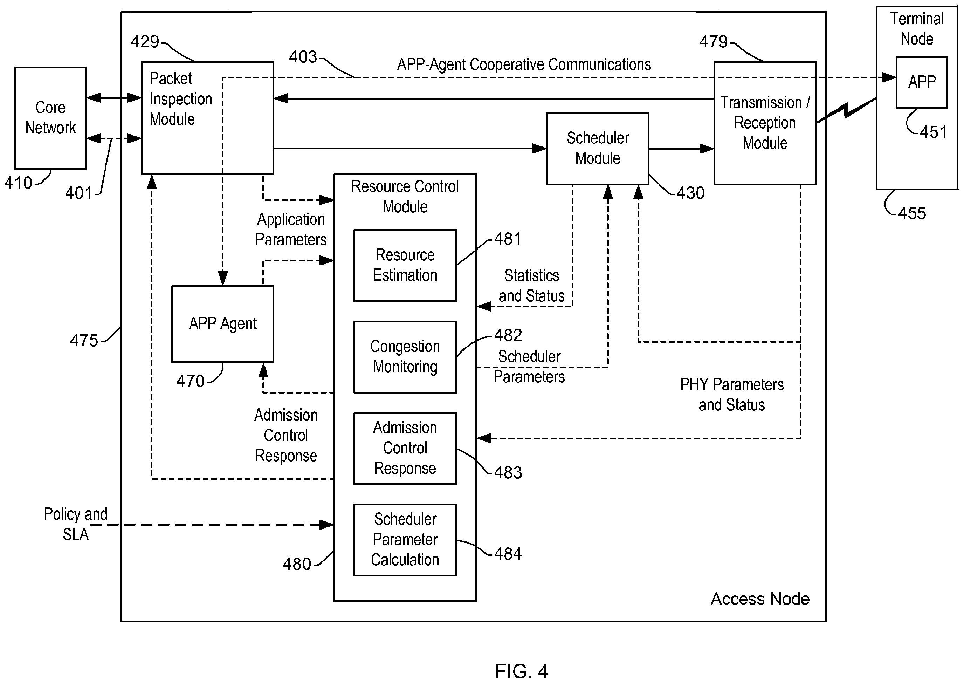

FIG. 4 is a diagram illustrating aspects of an access node 475 in accordance with aspects of the invention. The access node 475 communicates with a terminal node 455 and a core network 410. The macro base station 110, the pico station 130, the enterprise femtocell 140, or the enterprise gateway 103 of FIG. 1, in some embodiments, are implemented using the access node 475. The access node 475 may be implemented, for example, using the access node 275 of FIG. 2. The core network 410 may also be a service provider network, the Internet, or a combination of networks. To aid in understanding, in FIG. 4, solid lines represent user data and dashed lines represent control data. The distinction between user data and control data is from the point of view of the access node 475. Since the access node 475 acts as a bridge, there may be control data from the terminal node 455 to some entity, such as a video server, in the core network 410 that is perceived by the access node 475 as user data.

The access node 475 of FIG. 4 facilitates communication between the terminal node 455 and entities in core network 410 and beyond (for example, entities accessed via the Internet such as video servers). An application 451 in the terminal node 455 communicates with a server application in, or connected to, the core network 410 via the access node 475. The application 451 provides some functionality or service for a user of the terminal node 455. For example, the application 451 may be a software program executed by the terminal node 455. The application 451 in the terminal node 455 also communicates with an application agent 470 in the access node 475. The application 451 may be a module provided, for example, by the processor module 261 of the terminal node 255 of FIG. 3 using instructions from the storage module 263. The application agent 470 may be a module provided, for example, by the processor module 281 of the access node 275 of FIG. 2 using instructions from the storage module 283.

The application 451 and the application agent 470 communicate via an APP-agent cooperative communication control path 403. Communications between the application 451 and the application agent 470 may provide improved communication system performance, for example, improved QoE for the user of the terminal node 455. Applications that provide communications on the APP-agent cooperative communication control path 403 may be considered enhanced or cooperative applications.

Although FIG. 4 illustrates single instances of each element, in an embodiment, there may be multiple instances of various elements. For example, the access node may concurrently communicate with multiple terminal nodes, and each of the terminal nodes may have multiple applications that may concurrently cooperate with one or more application agents in one or more access nodes.

The access node 475 includes a packet inspection module 429, a scheduler module 430, and a transmission/reception module (transceiver) 479. The packet inspection module 429, the scheduler module 430, and the transmission/reception module 479 are used by the access node 475 in communicating with the terminal node 455. The transmission/reception module 479 provides communications with the terminal node 455. The transmission/reception module 479 may, for example, implement a radio access network physical layer. The access node 475 also includes a resource control module 480 that is responsible for various aspects of resource control. The application agent 470 may also communicate with the resource control module 480.

The packet inspection module 429 is in a data path between the core network 410 and the terminal node 455. In the downlink direction, the packet inspection module 429 receives data from the core network 410 and decides what to do with the data. For example, user data bound for the terminal node 455 may be segregated into queues at the scheduler module 430 for transmission to the terminal node 455 via the transmission/reception module 479. The segregation into queues may be based on various characteristics associated with the user data, such as logical link, IP source and destination addresses, or application class. In an embodiment, the packet inspection module 429 is part of or coupled to a data bridge/relay module. The packet inspection module 429 may also include a routing function performed before or after the data bridge/relay module.

Some data from the core network may be control data intended for control and configuration of the access node 475. This data may be directed to various control or management modules of the access node 475, for example, the resource control module 480.

The scheduler module 430 implements some or all of the functionality required to allocate physical resources across the communication link between the access node 475 and the terminal node 455. The scheduler module 430 is typically associated with or part of a medium access control (MAC) layer. For the downlink direction, the scheduler module 430 decides which data to transmit and at what point in time. The resources may be allocated, for example, as subcarriers and timeslots. The scheduler module 430 may also process uplink resource requests from the terminal node 455 and grant uplink bandwidth. The scheduler module 430 may use PHY information from the transmission/reception module 479, such as modulation and coding scheme, to determine the amount of resources to allocate to specific user data. The scheduler module 430 may also inform the resource control module 480 of congestion occurring on the communication link or statistics relating to congestion monitoring (for example, buffer occupancy and egress rates). In an embodiment, the scheduler module 430 may receive updates to scheduler parameters, such as changes to weights and credits, from the resource control module 480.

The packet inspection module 429 may also detect applications and provide application information, such as application class, specific application, data rates, and durations, to the resource control module 480. In an embodiment, the packet inspection module 429 may receive admission control response information and aid in implementing the admission control response, such as blocking packets for a particular connection or session.

The resource control module 480 shown in FIG. 4 includes a resource estimation module 481, a congestion monitoring module 482, an admission control response module 483, and a scheduler parameter calculation module 484. The resource estimation module 481 estimates the expected resource needs of currently active applications. The resource estimation module 481 may use application parameters, such as expected data rate, and PHY parameters, such as changes in modulation and coding for the terminal node 455, to estimate the expected resource needs. Any excess in resources can be available to new applications or available to increase the resources allocated to a currently active application.

The congestion monitoring module 482 monitors the current state of congestion. The current state of congestion may vary from the resource estimation performed by the resource estimation module 481. For example, when a short-term change in data rate occurs (for example, a peak in the data rate for a variable data rate streaming video), information from the scheduler module 430 may indicate current congestion (for example, an increase in buffer occupancy for an application or a decrease in buffer egress rate for an application) even though the long-term resource estimation does not indicate congestion. The congestion monitoring module 482 may also maintain historical congestion information that may be used in predicting congestion.

The admission control response module 483 may create control responses to admit, deny, delay, or modify logical links, connections, and/or streams thereby creating control responses for sessions. The admission control response module 483 may create the control responses using various information, for example, policies (e.g., priority of users or acceptable level of user QoE), service level agreement (SLA) information, application parameters (e.g., specific application or data rate), resource estimates, APP-agent cooperative communications, and congestion indicators.

The scheduler parameter calculation module 484 may calculate modifications to scheduler parameters, such as weights and credits. The scheduler parameter calculation module 484 may calculate the modifications using various information, for example, APP-agent cooperative communications, policies, SLA information, application parameters, resource estimates, congestion indicators, and control responses (e.g., admission control responses).

The transmission/reception module 479, in addition to facilitating uplink and downlink data transfer, may monitor or maintain physical layer (PHY) parameters and status, such as modulation, coding, and signal-to-noise ratio (SNR) associated with communication with the terminal node 455. Capabilities of the access node 475 to communicate with terminal nodes depend in part on the PHY parameters and status. Information about PHY parameters and status may be made available to the scheduler module 430 to make scheduling decisions and to the resource control module 480 to calculate scheduler parameter adjustments or to determine admission control responses. The transmission/reception module 479 may also facilitate or generate communication between radio access protocol modules in the access node 475 and the terminal node 455.

In the uplink direction, the packet inspection module 429 receives user data from the terminal node 455 via the transmission/reception module 479 and forwards the user data to the core network 410. The packet inspection module 429 also receives communications from the terminal node 455 destined for the application agent 470. The packet inspection module 429 can identify these communications and forwards them to the application agent 470.

The application agent 470 and the application 451 establish the APP-agent cooperative communication control path 403. The APP-agent cooperative communication control path 403 can be, for example, a TCP connection. The APP-agent cooperative communication control path 403 is used for exchanging APP-agent cooperative communications. Routing of data on the APP-agent cooperative communication control path 403 may be facilitated by the packet inspection module 429. Alternatively, the routing may be facilitated by a routing function that can be internal or external to the access node 475.

APP-agent cooperative communications from the application 451 to the application agent 470 can include, for example, information that allows the access node 475 to improve admission control and scheduling. The communications between the application agent 470 and the application 451 can, for example, provide additional information to the resource control module 480.

As an introductory example of APP-agent cooperative communications, consider a communication network where the application 451 provides YouTube streaming video to the user of the terminal node 455. The streaming video may be available in multiple formats with different associated data rates. Information about the formats may be communicated by a YouTube specific application to a YouTube aware application agent that may, in turn, provide the information about the formats to the resource control module. The resource control module can use the application information to generate an admission control response that indicates which formats, if any, fit with current estimates of available resources. The YouTube aware application agent may process the admission control response into APP-agent cooperative communications to the YouTube specific application specifying which formats are currently allowable. In various embodiments, the specific choice of format may be made by the application agent or by the application and communicated back to application agent. The application agent may inform the resource control module of the chosen format and associated data rate. The resource control module updates resource estimates and scheduler parameters to reflect the chosen format.

FIG. 4 illustrates a particular allocation of functions to various modules and a particular distribution of modules in various communication nodes. Many other arrangements may also be used. For example, all or parts of the packet inspection module 429, the application agent 470, and the resource control module 480 could be in a gateway node in the core network, for example, in a serving gateway (S-GW) or a packet gateway (P-GW) in an LTE network. Additionally, there may be intermediate devices between the access node 475 and the core network 410 and terminal node 455. Many combinations of applications and application agents and their related functions may also be used. For example, there may be one application agent that communicates with all applications, one application agent for each particular application (e.g., a YouTube application agent, a Pandora application agent, etc.), one application agent for each terminal node, or one application agent for each application (e.g., a YouTube application agent for a first terminal node and another YouTube application agent for a second terminal node). When there are multiple applications and application agents, there may be individual communications connections (e.g., TCP/IP connections) between each pair of application and application agent. Alternatively, communication between multiple applications and application agents may be aggregated and carried via a reduced number of connections. For example, a single TCP/IP connection may be used to communicate between multiple application agents and applications for a specific terminal node.

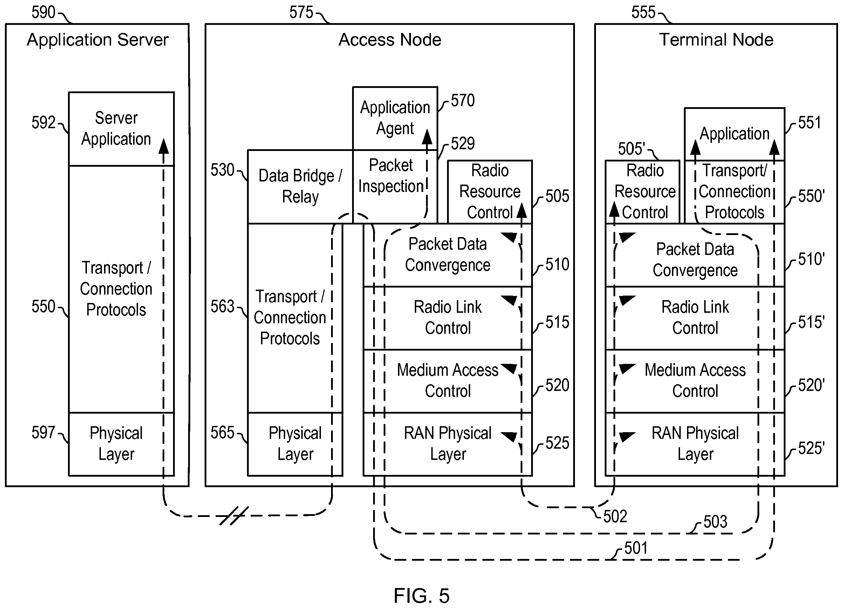

FIG. 5 is a block diagram of a communication system that shows control plane relationships in accordance with aspects of the invention. The communication system includes a terminal node 555, an access node 575, and an application server 590. The terminal node 555 includes an application 551 that communicates with a server application 592 in the application server 590. The communication is via the access node 575. The application 551 also communicates with an application agent 570 in the access node 575.

The exemplary protocols, control plane relationships, and other descriptions of FIG. 5 may be used to further understand aspects related to the access node 475 of FIG. 4. The access node 475 of FIG. 4 may be similar to or the same as the access node 575 of FIG. 5. The terminal node 455 of FIG. 4 may be similar to or the same as the terminal node 555 of FIG. 5. Similarly, communications between the access node 575 and the application server 590 may utilize a network similar to or the same as the core network 410 of FIG. 4. Furthermore, the application server 590 of FIG. 5 may be in or connected to a network similar to or the same as the internet service provider network 101 or the core network 102 of the communication network of FIG. 1. The application server may also be a network of separately located servers. While the communication system of FIG. 4 uses LTE protocol stacks, other communication systems may use other protocol stacks. There could be more or fewer protocol layers, the layer names and terminology could be different, the functionality could be different, and in which layer a function resides could be different.

Devices in a communication network commonly communicate on communication paths through multi-layered protocols. Protocol stacks in the communicating devices implement the protocols. For example, an application data path 501 conveys communications between the terminal node 555 and the application server 590 via the access node 575 using protocol stacks in each device. In addition to the protocol stacks for passing user application data and control, there may be protocol stacks for implementing and managing the communications link in support of the user application.

The access node 575 of FIG. 5 includes a radio access network (RAN) control plane protocol stack to implement the RAN control plane protocol for control plane communications between the terminal node 555 and the access node 575. The RAN control plane protocol in the access node 575 may be implemented using, for example, the processor module 281 of the access node 275 of FIG. 2 using instructions from the storage module 283. The RAN control plane protocol stack in the access node 575 includes a RAN physical (PHY) layer module 525, a medium access control (MAC) layer module 520, a radio link control (RLC) layer module 515, a packet data convergence (PDCP) layer module 510, and a Radio Resource Control (RRC) layer module 505. Each of these protocol stack layers in the access node 575 has a peer layer in the terminal node 555. Thus, the RAN control plane protocol stack in the terminal node 555 includes a PHY layer module 525', a MAC layer module 520', a RLC layer module 515', a PDCP layer module 510', and a RRC layer module 505'.

In the control plane, RAN control information is typically exchanged between higher or lower layers in the same node, logically creating peer-to-peer control links between a layer on the access node 575 and the corresponding layer on the terminal node 555. A RAN control path 502 connects the peer layers of the access node 575 and the terminal node 555. Although FIG. 5 illustrates a single terminal node 555, a RAN control plane layer on the access node 575 may have logical control links to multiple peers on multiple terminal nodes.

The peer RAN control plane layer modules exchange control information necessary to control and operate the communication link between the two devices. This control information originates and terminates within the access node 575 and the terminal node 555 and is specific to operating and managing the communication link. In contrast, user application data and application control messaging originate and terminate on the terminal node 555 and the application server 590. From the point of view of the access node 575, user application data and application control messaging may be considered to be transported on the data plane rather than the control plane.

The RAN physical layer module 525 of the access node 575 has a control message peer relationship with the RAN physical layer module 525' of the terminal node 555. The RAN physical layer module 525 of the access node 575 may, for example, request transmit power changes of the RAN physical layer module 525' of the terminal node 555. The RAN physical layer module 525' of the terminal node 555 may send radio link quality metrics, such as signal-to-noise ratio (SNR) measurements, to the RAN physical layer module 525 on the access node 575. The MAC layer module 520 of the access node 575 has a control message peer relationship with the MAC layer module 520' of the terminal node 555. The MAC layer modules may, for example, exchange resource requests and grants. The RLC layer module 515 of the access node 575 has a control message peer relationship with the RLC layer module 515' of the terminal node 555. The RLC layer module may, for example, exchange data segmentation and reassembly information. The PDCP layer module 510 of the access node 575 has a control message peer relationship with a PDCP layer module 510' of the terminal node 555. The PDCP layer modules may, for example, exchange encryption and compression information. The RRC layer module 505 of the access node 575 has a control message peer relationship with a RRC layer module 505' of the access node 575. The RRC layer modules may, for example, exchange quality of service (QoS) parameters of logical links.

For communication between the application 551 and the server application 592, a transport and connection protocols module 550' on the terminal node 555 and a peer transport and connection protocols module 550 on the application server 590 are used to establish the application data path 501. The application data path 501 transports application control data and application user data. In various embodiments, the application data path 501 may use the same or different transport and connection protocols for application control data and application user data. Additionally, the same or different instances (e.g., software processes) of the protocol stacks may be used for application control data and application user data.

The application data path 501 may be viewed as communicating user data by the RAN protocol stack. Unlike data on the RAN control path 502, data from the terminal node 555 on the application data path 501 does not terminate in the access node 575. Instead, data on the application data path 501 is bridged by a data bridge/relay module 530 to a communication link for eventual transport to the application server 590. When an application does not provide APP-agent cooperative communications, all application traffic can be bridged to the next node. For such an application, application control may be limited to communication between the application and an associated server application.

Transport to the application server 590 may involve multiple links from the access node 575, for example, through gateway node or router node. The access node 575 may use a further transport and connection protocols module 563 to communicate with a first upstream communication node via further physical layer module 565. The transport and connection protocols module 563 may, for example, use the evolved general packet radio service (GPRS) tunneling protocol (eGTP). The physical layer module 565 may, for example, transmit data on a microwave backhaul or a carrier Ethernet link. At the application server 590, the data is received via a physical layer module 597 and handed to the transport and connection protocols module 550. Accordingly, the transport and connection protocols module 550 in the application server 590 may provide protocols that are peers to the protocols used in the transport and connection protocols module 563 in the access node 575 and provide protocols for communication with other communication nodes between the application server 590 and the access node 575 in addition to the protocols for communication with the terminal node 555.

Data on application data path 501, data on the RAN control path 502, and data on APP-agent cooperative communication control path 503 is transported between the terminal node 555 and the access node 575 via the RAN protocol stacks. However, the packet inspection module 529 in the access node 575 can divert the APP-agent cooperative communications to the application agent 570. Creating and communicating messages on the APP-agent cooperative communication control path 503 may utilize additional protocols in the access node 575 that are peered to the protocols used in the transport and connection protocols module 550' in the terminal node 555. The additional protocols may be provided, for example, by the packet inspection module 529 or the application agent 570.

Networks use layers of protocols to abstract the functions of one layer from those provided by another layer. Abstraction of layers can allow greater portability of applications to different networks. Initiation and subsequent termination of flows of packets in a network may be triggered by particular applications or services. A flow of control and user data packets relating to the use of an end-user application or service is termed a session. Examples of sessions include a voice over internet protocol (VoIP) call using the Skype application from a laptop, streaming video playback using a YouTube app running on an Android-based mobile phone, and a 2-way video call using the Apple iChat application.

Network nodes, such as application servers or proxy servers, and terminal nodes, such as smart phones, tablets, or laptop computers, may initiate or participate in a session. Nodes may host one or more sessions simultaneously. The sessions may be independent from one another (e.g., a user using Facebook and email simultaneously) or related to each other (e.g., a browsing session that spawns two video streaming sessions). A session may be established between two nodes. Alternatively, a session may be viewed as a relationship between one node and many nodes through the use of, for example, multicast and broadcast packet protocols.

Sessions may be characterized or categorized by various criteria. A specific application refers to the particular application that was initiated by the user and responsible for launching the session. Examples of specific applications include a YouTube app, the Chrome internet browser, and Skype voice calling software. More generally, an application class can be used to describe an overall function served by a particular session. Example application classes include streaming video, voice calling, Internet browsing, email, and gaming.

A session may consist of one or more independent data streams using the same or potentially different underlying connections. For example, a single VoIP phone call session may contain two data streams. One data stream may serve the bidirectional voice traffic (i.e., payload or data plane packets) using a user datagram protocol (UDP) connection. A second data stream may use one or more transmission control protocol (TCP) connections for control data to handle call setup/teardown (i.e., signaling or control plane packets) as, for example, when using the session initiation protocol (SIP). In the example of video Skype, there may be one stream to carry SIP signaling, to start, stop, and otherwise control the session, a second stream to carry voice packets using the Real-Time Transport protocol (RTP), and a third stream to carry video packets using RTP.

When an application is initiated by a user on a terminal node, the application may start with control signaling between the application and an associated application server. For example, when a YouTube app is started, it requests information on available video feed selections from a YouTube feed server with multiple simultaneous hypertext transfer protocol (HTTP) requests. The YouTube feed server replies with data about the feeds in a compressed format in HTTP responses. Each HTTP request/response is performed on separate TCP connections which are setup via a TCP establishment (e.g., SYN, SYN-ACK, and ACK messages) protocol between the TCP stack on the terminal nodes and a TCP stack on the YouTube server. Once the video feed data are received, the YouTube app may ask for thumbnail images from a YouTube image server for the videos listed in the feed data using multiple simultaneous HTTP GET requests. The YouTube image server provides the requested thumbnail images in HTTP responses. Each thumbnail request/response is carried on its own separate TCP connection.

For each video in the video feeds and search results, multiple uniform resource locators (URL) for different formats of the video are provided. The YouTube app decides which format to use based on its capabilities and user configurations and preferences. The YouTube app sends an HTTP GET request to the server with the URL of the video in the selected format. The YouTube server sends back the requested video in an HTTP response. The HTTP response is segmented into many IP packets. The first IP packet of the HTTP response carries the HTTP response status code (200 = OK). An example of HTTP response headers is shown below.
HTTP/1.1 200 OK
Last-Modified: Sat, 11 Feb 2012 08:29:46 GMT
Content-Type: video/mp4
Date: Tue, 28 Feb 2012 00:31:10 GMT
Expires: Wed, 29 Feb 2012 00:31:10 GMT
Cache-Control: public, max-age=86400
Accept-Ranges: bytes
Content-Length: 56924607
X-User-Agent-Options: no-save
Connection: close
X-Content-Type-Options: nosniff
Server: gvs 1.0

In the example above, the HTTP response header "Content-Type" indicates that MP4 format video is included in the response. The HTTP response header "Content-Length" indicates that the length of the MP4 video included in the HTTP response is about 57 MB.

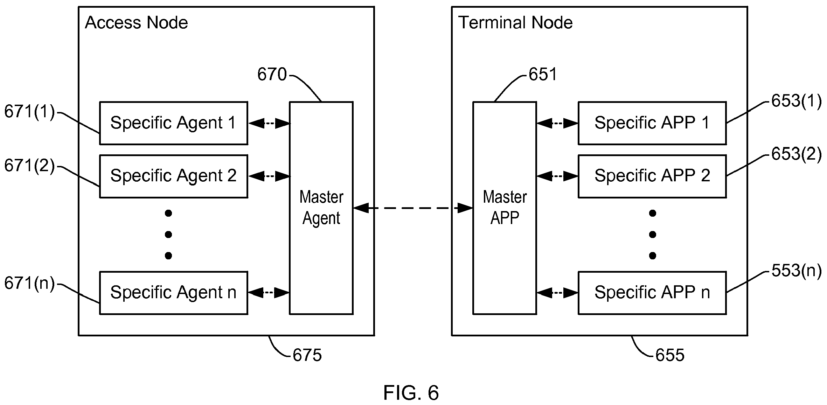

FIG. 6 is a block diagram of application agents and applications in accordance with aspects of the invention. The application agents are associated with an access node 675; the applications are associated with a terminal node 655. Applications in the terminal node 655 cooperatively operate with application agents in the access node 675. The application agents and applications may be used, for example, in the communication system of FIG. 4. The access node 675 of FIG. 6 may in various embodiments be similar to or the same as the access node 475 of FIG. 4; the terminal node 655 of FIG. 6 may in various embodiments be similar to or the same as the terminal node 455 of FIG. 4.

The access node 675 includes a master application agent 670. The master application agent 670 communicates with a master application 651 in the terminal node 655. In an embodiment, the master application 651 is part of an operating system of the terminal node 455. The master application agent 670 and the master application 651 facilitate communications between specific application agents 671(1)-671(n) in the access node 675 and specific applications 653(1)-653(n) in the terminal node 655.

The master application agent 670 and the master application 651 may facilitate communications between all the specific application agents 671 and the specific applications using a single TCP connection. An IP connection, in an embodiment, is established between the master application 651 and the master application agent 670.

The master application 651 and the master application agent 670 can be aware of the IP address of its peer, which may or may not be the same as the IP address of the associated access or terminal node, by various techniques. For instance, the access node may establish or discover a terminal node's IP address when the terminal node enters the network. In many embodiments, there are multiple concurrently operating terminal nodes and the master application agent 670 accordingly is aware of multiple peer node addresses. Address resolution protocol (ARP) may be used when a suitable, underlying Layer 2 address is available (e.g., an Ethernet MAC address) on which the ARP function may be based. Alternatively, the master application agent 670 may assign addresses to the master application 651 using a dynamic assignment technique, for example, dynamic host configuration protocol (DHCP). Alternatively, the IP connection information may be programmed into the master application 651 and the master application agent 670, for example, by an operator via a management connection. In another alternative, the access node 675 advertises the IP address of the master application agent 670. The IP address may be advertised as an augmentation of a control channel already in place for controlling the RAN (e.g., use a RAN control path). For example, the access node 675 may include the address in a network entry response to terminal nodes when they join the network or broadcast the address on a broadcast control channel (e.g., an LTE System Information Block (SIB) channel).

The IP address may not need to be routable outside the network defined by an access node and associated terminal nodes. Thus, various well-known, non-routable IP addresses may be used. The assignment of non-routable IP addresses in an LTE network may be based on an eNodeB physical cell identity (PCI). For example, the IP address of a master application agent in an eNodeB may be assigned a base address of 172.16.0.0 plus a 9-bit offset (of the 9 least-significant bits) corresponding to its 9-bit PCI value. The master application agent in an eNodeB with a PCI value of 255 would be assigned IP address of 172.16.0.255. As the eNodeB PCI is broadcast to all UEs within the eNodeB's serving range, the master application agent IP address would be calculable by a UE without RAN signaling overhead. This technique could also be applied to IPv6 addressing.

Similarly, the IP address of a master application in an LTE user equipment may also be a non-routable address. The non-routable address may be formed from a combination of a base address (using IPv4 or IPv6) plus an offset. The offset may be based, for example, on a default radio bearer identifier or Temporary Mobile Subscribe Identity (M-TMSI). As the addressing scheme can be known by the master application agent, the IP address of the master application can be known without RAN signaling overhead.

In an embodiment, communication between the master application 651 and the master application agent 670 is over a control communication channel specific to the radio access technology (RAT). The communications may use, for example, individual or broadcast messages. To facilitate new specific applications, RAT specific messages that provide a container for application specific messages may be used.

The master application agent 670 and the master application 651 may also process APP-agent cooperative communications. For example, the master application agent 670 or the master application 651 may coordinate, combine, or otherwise manipulate information communicated between the specific application agents 671 and the specific applications 653.

Information or requests that may be common to multiple different applications may be aggregated. For example, the master application agent 670 can provide the master application 651 with current congestion and excess resource headroom. The master application 651 can then supply congestion and resource headroom information to the specific applications 653.

Additionally, common queries, for example, whether a particular application class (e.g., voice, video) at a particular data rate can be supported with a desired level of QoS, may be uniformly implemented in a single master application-master application agent pair rather than in each specific application and specific application agent. Admission control responses, such as those which terminate or modify a service, may additionally be implemented in the master application 651 and the master application agent 670.

In addition to supporting common application-generated cooperative communications, the master application 651 and the master application agent 670 may pass through any additional APP-agent cooperative communication. That is, cooperative communications specific to a particular pair of the specific applications 653 and specific application agents 671 can pass through the master application 651 and the master application agent 670. For example, cooperative communications about a video client playback buffer status may pass from one of the specific applications 653 through the master application 651 and the master application agent 670 to one of the specific application agents 671.

Use of a master application agent or master application can reduce signaling overhead and reduce burdens on application developers. This can also reduce the complexity of interfacing the application agent(s) 671 with other functions in the access node 675, such as a resource control module.

Many variations on the application agents and applications shown in FIG. 6 are possible. For example, a master application may directly communication with specific application agents in an access node that does not include a master application agent. Existence or absence of a master application agent in an access node may be signaled by a presence bit or field in an already existing broadcast control channel, for example, in an LTE System Information Block (SIB) channel. Similarly, a master application agent may directly communication with specific applications in a terminal node that does not include a master application. Additionally, an access node may have a master application agent as well as one or more application agents that directly communicate with applications, and a terminal node may have a master application as well as one or more applications that directly communicate with application agents. Furthermore, the above addressing schemes (or variants thereof) can also be used in the absence of a master application agent or master application.

APP-agent cooperative communications can be used in many ways. The following paragraphs describe examples of APP-agent cooperative communications. Many examples are described for specific applications and specific network technologies, but it should be understood that the examples and variations thereof are widely applicable to other applications and other network technologies. Similarly, many of the examples are described for APP-agent cooperative communications between an application agent in an access node and an application in a terminal node but it should be understood that the examples and variations thereof are widely applicable to other devices.

APP-agent cooperative communications may be used to adapt video communications for changing communications network conditions, for example, RAN conditions. In real-time video streaming protocols, for example, an application agent can inform the associated real-time streaming video application when the communication system has more or fewer resources available. The application agent may, for example, inform the application about the network conditions by communicating resource availability or by communicating new preferred or maximum data rates or resolutions for the video. When requesting the next block of video, the application can request a different resolution in order to adapt the video to the change in resources.

APP-agent cooperative communications may be used to adjust scheduling of communications from an access node. A device that uses application-aware scheduling can obtain information about the application from the APP-agent cooperative communications. The information about the application obtained via APP-agent cooperative communications might otherwise be difficult or impossible to obtain. The APP-agent cooperative communications may reduce or eliminate the use of application and application information detection for cooperative applications. The cooperation may also provide more accurate information about the state of an application. For a video session, for example, the APP-agent cooperative communications can communicate whether a video is in an initial buffering state, a playback/viewing state, a paused state, a stopped state, a rewind state, or a fast forward state. The access node can use the video state in scheduling decisions. The APP-agent cooperative communications can communicate playback buffer status and freeze indications from the video client application. Scheduler parameters in the access node can be adjusted accordingly.

APP-agent cooperative communications may be used in admission control decisions. The APP-agent cooperative communications can be used to create a more accurate picture of resource demand for application-aware admission control systems. For example, a cooperative application on a terminal node such as a streaming video client may report the average bitrate and duration of a streaming video session using APP-agent cooperative communication. Such information may be used by an access node in calculating current and future resource demand. By subtracting resource demand from the access node capacity, a measure of the available excess capacity is created which may be applied to new services requesting admission.

The APP-agent cooperative communications can be used to provide increased options for admitting a modified version of a session or provide increased options for modifying other sessions to allow a new session. For example, a cooperative application on a terminal node may communicate a set of bitrate options available for a video clip by using APP-agent cooperative communication (e.g., a list of rendering bitrates transmitted by a "Dynamic Adaptive Streaming over HTTP" or DASH server to a DASH application during session initialization). Based upon the available excess capacity, the access node may eliminate or forbid the use of one or more of the higher bitrate options in the list. The reduced list may be communicated back to the terminal node providing the application with a reduced set of bitrate options. This allows for reliable video playback within the constraints of the access node's available capacity. Additionally or alternatively, in networks with multiple terminal nodes, support of a new video session, such as the DASH session above, may include sending an updated bitrate list to one or more video sessions already in progress. For example, in order to support a new tenth DASH video session (the tenth session to be added with nine ongoing sessions), an access node may reduce the maximum bitrate available to the tenth session as well as send updated bitrate lists (with lower maximum bitrate options) to one or more of the ongoing nine sessions in order to free sufficient capacity to support the tenth session. During times of increasing excess capacity, the methods above may be reversed (i.e., expanding the bitrate list by increasing the maximum allowable bitrate) in order to improve user QoE. Additionally, in systems, such as LTE, where admission control is specified on a coarse, logical bearer basis rather than on a per session basis, APP-agent cooperative communications can be used to create finer grained admission control that responds with denials and modifications on a per session basis.

APP-agent cooperative communications may be used during handover. Information from the APP-agent cooperative communications can be used to optimize user quality of experience (QoE) during handover. For example, data buffered in an application may be increased prior to handover to avoid the buffer emptying during handover. When a handover is expected for a terminal node running a cooperative video application and the access node is aware, through APP-agent cooperative communication, that the video client playback buffer has additional capacity, scheduler parameters in the access node may be adjusted to increase the amount of video data buffered in the terminal node just prior to handover. Handover timing may also be controlled so that handover occurs during a convenient time for the application, that is, during a time that any interruption or delay in communication has less impact on QoE. For example, if handover is expected but not immediately necessary, handover may be initiated immediately when the application indicates to the application agent that the video has been paused. Similarly, an application agent may instruct applications communicating delay tolerant information, such as an email application or a browser application, to defer send or receive requests until after handover is complete. Handover improvement through APP-agent cooperative communications may improve efficiency for both the application and the communication network versus retransmitting data lost or damaged during handover.

APP-agent cooperative communications may be used to assess video quality. For example, the APP-agent cooperative communications can communicate information from RTP control protocol (RTCP) reports. RTCP reports contain information that allows assessing video quality. While an access node may be able to detect and extract information from RTCP reports (for example, using a packet inspection module), the same or similar information can be passed from an application to an application agent, reducing the computational resources needed in the access node. Availability of video quality information may be used to adjust scheduler parameters and resource allocations. For example, the access node may increase scheduler priorities for a video application to improve the quality if it is insufficient or may reallocate resource to other applications if the quality is above a threshold.

APP-agent cooperative communications may be used in scheduling acknowledgments. Information from the APP-agent cooperative communications may be used, for example, in scheduling TCP Acknowledgment (ACK) messages. Improved scheduling of TCP ACK messages on the uplink can avoid or rectify situations that may cause a stall or downlink data starvation for an application using TCP as one of its transport and connection protocols. The access node may use information about the timing of TCP ACK messages when the access node allocates uplink bandwidth to the terminal node. More precise timing of uplink bandwidth allocation for TCP ACK messages may be possible if a cooperative application provides information regarding the expected occurrences of TCP ACK messages. Communication bandwidth used for bandwidth allocation may also be reduced.

Additionally, robustness of modulation and coding schemes may be increased when TCP ACK messages are expected. Alternatively, a cooperative application may send a TCP ACK message after a timeout even though data was not received in order to prevent a stall or freeze. The timeout occurrences can be reported to the application agent, for example, for use in adjusting scheduler parameters to improve future performance. The application agent may report congestion conditions to the application allowing it to change its timeout threshold for sending a TCP ACK message after a timeout even though data was not received. Changing the threshold can occur, for instance, when the next segment of video can be requested at a lower rate to avoid future congestion, but the likelihood of freezes is high for the remainder of the current video segment.

APP-agent cooperative communications may be used in service differentiation. Information from the APP-agent cooperative communications may be used, for example, to distinguish service scenarios that may otherwise be difficult or impossible to detect. A cooperative email application may, for example, indicate to the corresponding application agent what event triggered an email synchronization. When the email synchronization is triggered by a timeout or some other machine-generated stimulus, the access node may give a relatively low priority to scheduling the downlink data and corresponding uplink protocol, and when the email synchronization is triggered by a user action, the access node may give a relatively high priority to scheduling the downlink data and corresponding uplink protocol. Thus, a higher priority is used when the user is waiting and a lower priority is used when no user is waiting. Accordingly, the APP-agent cooperative communications from a terminal node to an access node may include information about the stimulus of a communications request, for example, whether a user is waiting for requested data.

Similarly, an application may distinguish whether a user is specifically requesting to view a video (e.g., the user clicked on a video link) from a video coincidentally embedded in a webpage (e.g., the user chose a link to a news article that happens to have an embedded video). When the user chooses a video specifically, the QoE of the video is more important and a scheduler can adjust scheduler parameters accordingly based on information from APP-agent cooperative communications. In contrast, when the video is secondary, the scheduler can give more priority to the text of the story. Similar consideration may be used, for example, during severe congestion, to admission control decisions.

Furthermore, an application that combines multiple media in a session can signal the relative importance of the media to the application agent. A video calling application, for example, may deem the voice portion of the session to be more important than the video portion. If there are insufficient resources for both the voice portion and the video portion, the access node can use information about the relative importance received in APP-agent cooperative communications to preserve quality of the audio portion while the video portion is degraded or denied.

APP-agent cooperative communications may be used to avoid reduced QoE caused by traffic grooming. Traffic rates to and from a terminal node may be limited in multiple ways. When traffic rate limits are exceeded, traffic grooming may be triggered with some packets dropped or delayed. The traffic grooming may occur in a communication node that is not aware of the needs of the terminal node's applications. Such a communication node would thus delay or drop packets without regard to the effects on QoE. The APP-agent cooperative communications can be used by applications to avoid requesting excessive data that could trigger grooming. By not triggering grooming, the QoE may be improved. Other capabilities for communication can be similarly signaled to a terminal node, and the terminal node can adjust its requests accordingly.

An example rate limit is the aggregate maximum bit rate (AMBR) that an LTE system applies to a terminal node (user equipment in LTE nomenclature). The AMBR governs bandwidth resources that may be allocated to the terminal nodes, even if excess system resources exist. The LTE packet gateway is often provisioned to groom the data going to the terminal node, delaying or discarding packets, to ensure the average data rate is no more than the AMBR.

Traffic rates for a terminal node may also be limited contractually by a service level agreement (SLA). SLA limits may apply at various levels, for example, the terminal node, a logical link, a bearer, or a connection.

The terminal node may have limited or no knowledge of its rate limits. For example, the terminal may know its AMBR but not the SLA limits. Individual applications generally do not know the rate limits. Furthermore, the individual application would not know which other applications are active or the resource demands of the other applications relative to the rate limits. For example, a video application may not know whether a particular video resolution will cause a rate limit to be exceeded, and thus trigger delays and discards of packets for all the applications on the terminal node.

In an embodiment, a master application or master application agent, for example, as shown in FIG. 6, may keep track of cumulative application resource requests and track the cumulative resources versus rate limits. Other modules, for example, a part of the terminal node's operating system or a part of the RAN protocol stack (e.g., radio resource control (RRC) or radio resource management (RRM) for LTE), may keep track of cumulative application resource requests for use by applications. A cooperative application may communicate with the master application, the master application agent, or another module to determine the remaining data rate available and use the rate information in guiding its requests for data. In various embodiments, the cumulative resource requests may be tracked in the access node or the terminal node. The mechanism by which applications determine the resource allocation and rate limit information varies according to where the information is available. For example, an application may communicate with an application agent that communicates with module in the RAN protocol stack that keeps track of resource utilization and rate limits for the terminal node and its collection of active applications.

APP-agent cooperative communications may be used for analyzing the performance of a communications network. Information related to performance can be collected from APP-agent cooperative communications. For example, when an application communicates information about video stalls, audio stalls, or buffer under-runs, the information can be used to analyze the performance of the terminal node, the access node, and other area of the communication system. The application may additionally communicate the number and duration of playback stalls or a chronology of playback, start and stop times of each video or audio session. The application may communicate an estimate of video or audio playback quality, for example, in the form of a mean opinion score (MOS). Additionally, the application may communicate packet-level quality of service (QoS) metrics, for example, packet delay and jitter, measured at the terminal node. The application may also report user-level (human) actions that may signal severe dissatisfaction with network performance, for example, one or more browser or application refreshes, duplicate 'clicks' or 'touches' on the same link or command, or user shutdown of an application following a period of poor network quality or poor application responsiveness. The various information can be used to determine a level of congestion that is acceptable for different applications or different mixes of applications. The information can also be used by the operator to determine when to add more resources to a network.

It is clear from these examples that APP-agent cooperative communications can be used for many different types of information, used with many different types of applications, and used to improve many different aspect of a communication network.

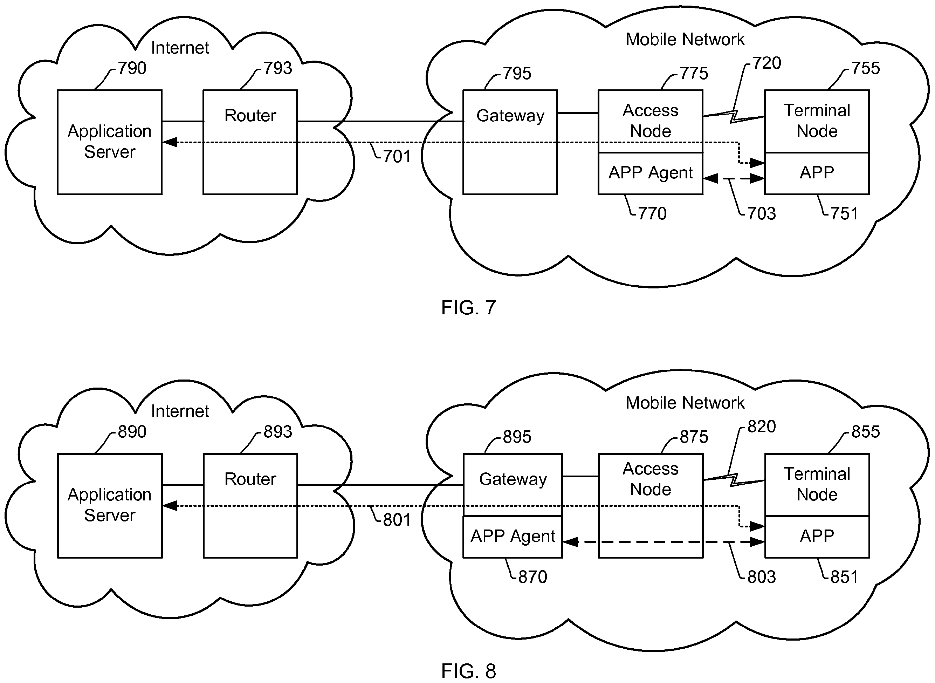

FIG. 7 is a block diagram of a communication system with application agents and applications in accordance with aspects of the invention. A terminal node 755 hosts an application 751. The application 751 may communicate with an application server 790 to facilitate providing services to a user of the terminal node 755. Various elements of the communication system may the same or similar to like named elements described above.

The terminal node 755 in the communication system shown in FIG. 7 communicates with an access node 775 over a radio link 720. The access node 775 is connected to a gateway node 795. The gateway node 795 provides access to the Internet via connectivity to a router node 793. The router node 793 provides access to the application server 790. Thus, the application 751 can communicate with the application server 790 using an application data path 701 through the access node 775, the gateway node 795, and the router node 793. The application data path 701 transports application user data (e.g., video data) and application control data (e.g., information regarding possible videos available and their formats). The access node 775 acts as a bridge for communications on the application data path 701, passing it between the terminal node 755 the next node in the communication system.

The application 751 also communicates with an application agent 770 in the access node 775 using an APP-agent cooperative communication control path 703. The APP-agent cooperative communication control path 703 is transmitted over the radio link 720. Communications on the APP-agent cooperative communication control path 703 between the application 751 and the application agent 770 may be used, for example, for improving scheduling, admission control, efficiency, and responsiveness.

FIG. 8 is a block diagram of another communication system with application agents and applications in accordance with aspects of the invention. The communication system of FIG. 8 is similar to the communication system of FIG. 7 and includes a terminal node 855, an access node 875, a gateway node 895, a router node 893, and an application server 890 that correspond to like-named devices in the communication system of FIG. 7. The terminal node 855 communicates with the access node 875 over a radio link 820. The access node 875 is connected to the gateway node 895. The gateway node 895 provides access to the Internet via connectivity to the router node 893. The router node 893 provides access to the application server 890.

An application 851 in the terminal node 855 can communicate with the application server 890 using application data path 801 through the access node 875, the gateway node 895, and the router node 893. The application 851 also communicates with an application agent 870 using an APP-agent cooperative communication control path 803. In the communication system of FIG. 8, the application agent 870 is in the gateway node 895. Information from the application agent 870 may be provided to the access node 875. The APP-agent cooperative information may be supplied, for example, to scheduler and resource control modules in the access node 875. The access node 875 can use the APP-agent cooperative information, for example, for improving scheduling, admission control, efficiency, and responsiveness.

In another embodiment, an application agent may be located in the router node 893 or in another network node. The functions of an application agent may also be distributed over multiple devices.

Additionally, if the APP-agent cooperative communication control path 803 is via an IP connection, the path may be through additional communication nodes. For example, cooperative communications may be routed through the router node 893. Locating the application agent outside the access node 875 may eliminate or reduce uplink packet inspection requirements in the access node 875. A remotely located application agent may also perform function for multiple access nodes.

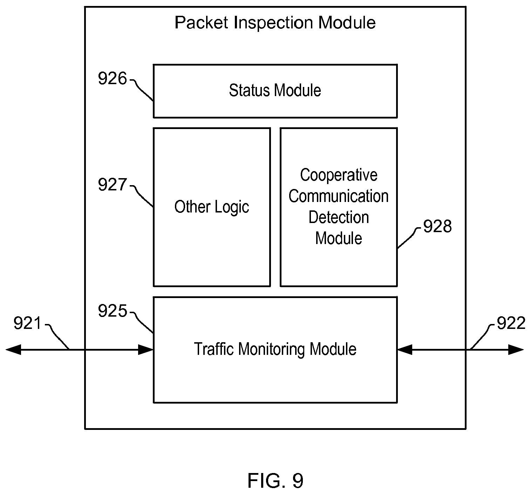

FIG. 9 is a block diagram of a packet inspection module in accordance with aspects of the invention. The packet inspection module 429 of the access node 475 of FIG. 4 may be, may, for example, be provided by the packet inspection module of FIG. 9. The packet inspection module may be used in a data path between a RAN protocol stack and other entities, such as application servers, residing in a core network or the Internet.

Uplink data may come to the packet inspection module from via a first path 921 (e.g., on a radio link) and be forwarded from the packet inspection module via a second path 922 (e.g., on a backhaul connection). Downlink data may come to the packet inspection module via the second path 922 and be forwarded from the packet inspection module via the first path 921.

The packet inspection module includes a traffic monitoring module 925 that may monitor traffic on the first path 921 and the second path 922. The traffic monitoring module 925 identifies APP-agent cooperative communications from an application destined for an application agent. In particular, the traffic monitoring module 925 may monitor the uplink traffic on the first path 921 to identify APP-agent cooperative communications. The APP-agent cooperative communications may be identified using, for example, IP addresses.

The traffic monitoring module 925 may also monitor traffic at the packet inspection module for other purposes, and the packet inspection module may include an other logic module 927 to address the other purposes. The packet inspection module may also detect information about applications associated with the traffic on the first and second paths. Further examples of packet inspection, traffic monitoring, and application-aware communication systems may be found in of U.S. patent application Ser. No. 13/549,106, filed July 13, 2012 and titled "Systems and Methods for Detection for Prioritizing and Scheduling Packets in a Communication Network," U.S. provisional application Ser. No. 61/640,984, filed May 1, 2012 and titled "Application Aware Admission Control," and U.S. provisional application Ser. No. 61/579,324, filed Dec. 22, 2011 and titled "Congestion Induced Video Scaling,".

APP-agent cooperative communication traffic is diverted to a cooperative communication detection module 928. The cooperative communication detection module 928 provides further processing on the APP-agent cooperative communication traffic. An example of the further processing is forwarding the traffic to an appropriate application agent. The further processing may also include no processing, for example, when the cooperative communication detection module 928 determines that the traffic forwarded to it is not for an application agent associated with the packet inspection module.

The packet inspection module, as illustrated in FIG. 9, may include a status module 926. The status module 926 may keep track of information regarding instances of connectivity between applications and application agents. The information may include, for example, status (e.g., connected, disconnected, active, idle), current resource expectations, and historical data (e.g., resources requested versus resources used).

The foregoing systems and methods and associated devices and modules are susceptible to many variations. Additionally, for clarity and concision, many descriptions of the systems and methods have been simplified. For example, the figures generally illustrate one of each type of device (e.g., one access node, one terminal node), but a communication system may have many of each type of device. Similarly, many descriptions use terminology and structures of a specific wireless standard such as LTE. However, the disclosed systems and methods are more broadly applicable, including for example, in hybrid fiber-coax cable modem systems.

Those of skill will appreciate that the various illustrative logical blocks, modules, units, and algorithm steps described in connection with the embodiments disclosed herein can often be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular constraints imposed on the overall system. Skilled persons can implement the described functionality in varying ways for each particular system, but such implementation decisions should not be interpreted as causing a departure from the scope of the invention. In addition, the grouping of functions within a unit, module, block, or step is for ease of description. Specific functions or steps can be moved from one unit, module, or block without departing from the invention.

The various illustrative logical blocks, units, steps and modules described in connection with the embodiments disclosed herein can be implemented or performed with a processor, such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

The steps of a method or algorithm and the processes of a block or module described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium. An exemplary storage medium can be coupled to the processor such that the processor can read information from, and write information to, the storage medium. In the alternative, the storage medium can be integral to the processor. The processor and the storage medium can reside in an ASIC. Additionally, device, blocks, or modules that are described as coupled may be coupled via intermediary device, blocks, or modules. Similarly, a first device may be described a transmitting data to (or receiving from) a second device when there are intermediary devices that couple the first and second device and also when the first device is unaware of the ultimate destination of the data.

The above description of the disclosed embodiments is provided to enable any person skilled in the art to make or use the invention. Various modifications to these embodiments will be readily apparent to those skilled in the art, and the generic principles described herein can be applied to other embodiments without departing from the scope of the invention. Thus, it is to be understood that the description and drawings presented herein represent a presently preferred embodiment of the invention and are therefore representative of the subject matter that is broadly contemplated by the present invention. It is further understood that the scope of the present invention fully encompasses other embodiments that may become obvious to those skilled in the art and that the scope of the present invention is accordingly limited by nothing other than the appended claims.

## Claims

1. An access node (475), comprising:
a transceiver module (479) configured to communicate with a first terminal node (455) that is hosting a first user application (451);
a backhaul module (285) configured to provide communications with an application server;
an application agent module (470) that is associated with the first user application (451) and that is configured to receive state information about the first user application (451) from the first terminal node (455) via an established first application-agent cooperative communication control path (403) between the application agent module (470) and the first user application (455);
a scheduler parameter calculation module (484) configured to modify at least one scheduler parameter using the received state information about the first user application (451); and
a scheduler module (430) configured to receive downlink packets via the backhaul module (285), group the downlink packets into queues, and schedule the downlink packets for transmission by the transceiver module (479) utilizing the modified at least one scheduler parameter.

2. The access node (475) of claim 1,
(a) further comprising an admission control response module (483) configured to receive an admission request from the first terminal node (455) and determine an admission control response utilizing the state information about the first user application (451); or
(b) further comprising an admission control response module (483) configured to receive an admission request from the first terminal node (455) and determine an admission control response utilizing the state information about the first user application, wherein the admission request includes an indication of multiple formats that may be used in a session associated with the admission request, and wherein the admission control response includes indications of which of the formats, if any, are within the bounds of current estimates of available resources for communications with the first terminal node (455).

3. The access node (575, 675) of claim 1, wherein:
the transceiver module (479) is further configured to communicate with a second terminal node (455, 555) that is hosting a second user application (451, 551); and
the application agent module (475) is further configured to establish a second application-agent cooperative communication control path (403, 503) between the application agent module (470) and the second user application (451, 551), and the application agent module (470) comprises
a master application agent module (670) that is associated with the first user application (451) and the second user application (455, 555) and is configured to receive the state information about the first user application (451) and the second user application (451, 551) and to process a first portion of the state information that is common to both the first user application (451) and the second user application (451, 551), and
at least one specific application agent module (671(1)-671(n)) that is coupled to the master application agent module (670) and is configured to receive at least some of the state information about one or more of the first user application (451) and the second user application (451, 551).

4. The access node (475, 575, 675) of claim 1,
(a) wherein the access node (475, 575, 675) is configured to transmit to the first terminal node information about capabilities of the access node (475, 575, 675) for communication with the first terminal node (455); or
(b) wherein the access node (475, 575, 675) is configured to transmit to the first terminal node information about capabilities of the access node (475, 575, 675) for communication with the first terminal node (455), wherein the information about capabilities of the access node (475, 575, 675) for communication includes congestion information.

5. The access node (475, 575, 675) of claim 1,
(a) wherein the transceiver module (479) is configured to transmit the scheduled downlink packets to the first terminal node (455) along with characteristics that include timing of handover of the first terminal node (455) to another access node; or
(b) wherein the transceiver module (479) is configured to transmit the scheduled downlink packets to the first terminal node (455) along with characteristics that include timing of handover of the first terminal node (455) to another access node, wherein the characteristics include characteristics that improve quality of experience for a user of the first terminal node (455).

6. The access node (475, 575, 675) of claim 1, wherein the transceiver module (479) is configured to transmit the scheduled downlink packets to the first terminal node (455) along with characteristics that are based at least in part on historical congestion information associated with past communications between the access node (475, 575, 675) and the first terminal node(455).

7. The access node (475, 575, 675) of claim 1,
(a) wherein the state information about the first user application (451) includes information selected from the group consisting of information about occupancy of a video playback buffer in the first terminal node (455), information about quality of a video transmitted to the first terminal node (455), information for analyzing performance of a communications network that includes the access node (475, 575, 675), and an estimate of audio quality; or
(b) wherein the first user application (451) is a video application, and wherein the state information about the first user application (451) includes indications of video freezes; or
(c) wherein the state information about the first user application (451) includes a streaming status selected from the group consisting of an initial buffering state, a playback state, a paused state, a stopped state, a rewind state, and a fast forward state; or
(d) wherein some of the downlink packets were received from the application server in response to a request from the first terminal node (455), and wherein the state information about the first user application (451) includes information about a stimulus for the request received from the first terminal node (455); or
(e) wherein some of the downlink packets were received from the application server in response to a request from the first terminal node (455), and wherein the state information about the first user application (451) includes information about a stimulus for the request received from the first terminal node (455), wherein the information about the stimulus indicates whether a user is waiting for a response to the request, and wherein the priority of the at least one scheduler parameter used to schedule communications associated with the request is increased when the user is waiting; or
(f) wherein the transceiver module (479) is further configured to receive, from the first terminal node (455), a request for data from an application server, wherein the request is for multiple media, and wherein the state information about the first user application (451) includes indications of relative priorities of the media; or
(g) wherein the first user application (451) is a streaming application, and wherein the state information about the first user application (451) includes information about the timing of streaming events that includes numbers and durations of stalls; or
(h) wherein the state information about the first user application (451) includes information about actions by a user of the first terminal node (455) that indicate dissatisfaction with communications performance; or
(i) wherein the state information about the first user application (451) includes a packet-level quality of service metric measured by the first terminal node (455).

8. The access node (475, 575, 675) of claim 1, configured to set the at least one scheduler parameter to increase priority of communications to the first terminal node (455) prior to handover of the first terminal node (455) to another access node.

9. A method for operating an access node (475, 575, 675), the access node (475, 575, 675) configured to provide communications between a first terminal node (455) and an application server, the method comprising:
receiving, from the first terminal node (455), state information about a first user application (451) being hosted at the first terminal node (455), the state information being received by an application agent module (470) in the access node (475) via a first application-agent cooperative communication control path (403) established between the application agent module (470) and the first user application (451);
modifying at least one scheduler parameter using the received state information about the first user application (451);
receiving downlink packets from the application server via a backhaul module (285), and grouping the downlink packets into queues; and
scheduling the queues of downlink packets for transmission from the access node (475) to the first terminal node (455) based on the modified at least one scheduler parameter.

10. The method of claim 9,
(a) further comprising transmitting to the first terminal node (455) information about capabilities of the access node (475) for communication with the first terminal node (455); or
(b) further comprising transmitting to the first terminal node information about capabilities of the access node (475) for communication with the first terminal node (455), wherein the information about capabilities of the access node (475) for communication includes congestion information.

11. The method of claim 9,
(a) wherein the state information about the first user application (451) includes information selected from the group consisting of information about occupancy of a video playback buffer in the first terminal node (455), information about quality of a video transmitted to the first terminal node (455), information for analyzing performance of a communications network that includes the access node (475, 575, 675), and an estimate of audio quality; or
(b) wherein the first user application (451) is a video application, and wherein the state information about the first user application (451) includes indications of video freezes; or
(c) wherein the state information about the first user application (451) includes a streaming status selected from the group consisting of an initial buffering state, a playback state, a paused state, a stopped state, a rewind state, and a fast forward state; or
(d) wherein some of the downlink packets were received from the application server in response to a request from the first terminal node (455), and wherein the state information about the first user application (451) includes information about a stimulus for the request received from the first terminal node (455); or
(e) wherein some of the downlink packets were received from the application server in response to a request from the first terminal node (455), and wherein the state information about the first user application (451) includes information about a stimulus for the request received from the first terminal node (455), wherein the information about the stimulus indicates whether a user is waiting for a response to the request, and wherein the priority of the at least one scheduler parameter used to schedule communications associated with the request is increased when the user is waiting; or
(f) further comprising receiving, from the first terminal node (455), a request for data from the application server, wherein the request is for multiple media, and wherein the state information about the first user application (451) includes indications of relative priorities of the media; or
(g) wherein the first user application (451) is a streaming application, and wherein the state information about the first user application (451) includes information about the timing of streaming events that includes numbers and durations of stalls; or
(h) wherein the state information about the first user application (451) includes information about actions by a user of the first terminal node (455) that indicate dissatisfaction with communications performance; or
(i) wherein the state information about the first user application (451) includes a packet-level quality of service metric measured by the first terminal node (455).

12. The method of claim 9,
(a) wherein the access node (475) transmits the scheduled queues of downlink packets to the first terminal node (455), the downlink packets being transmitted along with characteristics that utilize the state information about the first user application (451); or
(b) wherein the access node (475) transmits the scheduled queues of downlink packets to the first terminal node (455), the downlink packets being transmitted along with characteristics that utilize the state information about the first user application (451), wherein the characteristics include timing of a handover of the first terminal node (455) to another access node; or
(c) wherein the access node (475) transmits the scheduled queues of downlink packets to the first terminal node (455), the downlink packets being transmitted along with characteristics that utilize the state information about the first user application (451), wherein the characteristics include characteristics that improve quality of experience for a user of the first terminal node (455).

13. The method of claim 9, wherein the at least one scheduler parameter is set to increase priority of communications to the first terminal node (455) prior to handover of the first terminal node (455) to another access node.

14. The method of claim 9,
(a) further comprising determining an admission control response utilizing the state information about the first user application (451); or
(b) further comprising determining an admission control response utilizing the state information about the first user application (451), wherein the admission control response is determined in response to an admission request from the first terminal node (455), wherein the admission request includes an indication of multiple formats that may be used in a session associated with the admission request, and wherein the admission control response includes indications of which of the formats, if any, are within the bounds of current estimates of available resources for communications with the first terminal node (455).

15. The method of claim 9, further comprising maintaining historical congestion information associated with communications between the access node (475) and the first terminal node (455), and wherein the scheduled queues of downlink packets are transmitted to the first terminal node (455) along with further characteristics that are based at least in part on the historical congestion information.

16. The method of claim 9, wherein the state information about the first user application (451) is relayed from the first terminal node (455) to the access node (475) via a third device, and wherein the third device processes the state information before relaying the state information to the access node (475).

17. The method of claim 9, wherein the application agent module (470) includes a master agent module and a plurality of specific application agent modules (671(1)-671(n)), and wherein one of the plurality of specific application agent modules receives the state information about the first user application (451) via the master agent module and another of the plurality of specific application agent modules receives information about another application via the master agent module.

## Patentansprüche

1. Zugangsknoten (475), umfassend:
ein Transceiver-Modul (479), das dazu konfiguriert ist, mit einem ersten Endknoten (455) zu kommunizieren, der eine erste Benutzeranwendung (451) hostet;
ein Backhaul-Modul (285), das dazu konfiguriert ist, Kommunikation mit einem Anwendungsserver bereitzustellen;
ein Anwendungsagentenmodul (470), das mit der ersten Benutzeranwendung (451) assoziiert ist und das dazu konfiguriert ist, Zustandsinformationen über die erste Benutzeranwendung (451) von dem ersten Endknoten (455) über einen etablierten kooperativen Kommunikationssteuerungspfad (403) der ersten Anwendung und des Agenten zwischen dem Anwendungsagentenmodul (470) und der ersten Benutzeranwendung (455) zu empfangen;
ein Scheduler-Parameter-Berechnungsmodul (484), das dazu konfiguriert ist, mindestens einen Scheduler-Parameter unter Verwendung der empfangenen Zustandsinformationen über die erste Benutzeranwendung (451) zu modifizieren; und
ein Scheduler-Modul (430), das dazu konfiguriert ist, Downlink-Pakete über das Backhaul-Modul (285) zu empfangen, die Downlink-Pakete in Warteschlangen zu gruppieren und die Downlink-Pakete zur Übertragung durch das Transceiver-Modul (479) unter Verwendung des modifizierten mindestens einen Scheduler-Parameters zeitlich einzuplanen.

2. Zugangsknoten (475) nach Anspruch 1,
(a) ferner umfassend ein Zulassungssteuerungsantwortmodul (483), das dazu konfiguriert ist, eine Zulassungsanforderung von dem ersten Endknoten (455) zu empfangen und eine Zulassungssteuerungsantwort unter Nutzung der Zustandsinformationen über die erste Benutzeranwendung (451) festzulegen; oder
(b) ferner umfassend ein Zulassungssteuerungsantwortmodul (483), das dazu konfiguriert ist, eine Zulassungsanforderung von dem ersten Endknoten (455) zu empfangen und eine Zulassungssteuerungsantwort unter Nutzung der Zustandsinformationen über die erste Benutzeranwendung festzulegen, wobei die Zulassungsanforderung einen Hinweis auf mehrere Formate enthält, die in einer Sitzung verwendet werden können, die mit der Zulassungsanforderung assoziiert ist, und wobei die Zulassungsteuerungsantwort Hinweise beinhaltet, welche der Formate gegebenenfalls innerhalb der Grenzen der aktuellen Schätzungen der verfügbaren Ressourcen für Kommunikationen mit dem ersten Endknoten (455) liegen.

3. Zugangsknoten (575, 675) nach Anspruch 1, wobei:
das Transceiver-Modul (479) ferner dazu konfiguriert ist, mit einem zweiten Endknoten (455, 555) zu kommunizieren, der eine zweite Benutzeranwendung (451, 551) hostet; und
das Anwendungsagentenmodul (475) ferner dazu konfiguriert ist, einen kooperativen Kommunikationssteuerungspfad (403, 503) der zweiten Anwendung und des Agenten zwischen dem Anwendungsagentenmodul (470) und der zweiten Benutzeranwendung (451, 551) zu etablieren und das Anwendungsagentenmodul (470) Folgendes umfasst:
ein Master-Anwendungsagentenmodul (670), das mit der ersten Benutzeranwendung (451) und der zweiten Benutzeranwendung (455, 555) assoziiert ist und dazu konfiguriert ist, die Zustandsinformationen über die erste Benutzeranwendung (451) und die zweite Benutzeranwendung (451, 551) zu empfangen und einen ersten Teil der Zustandsinformationen zu verarbeiten, der sowohl der ersten Benutzeranwendung (451) als auch der zweiten Benutzeranwendung (451, 551) gemein ist, und
mindestens ein spezifisches Anwendungsagentenmodul (671(1)-671(n)), das mit dem Master-Anwendungsagentenmodul (670) gekoppelt ist und dazu konfiguriert ist, mindestens einige der Zustandsinformationen über eine oder mehrere der ersten Benutzeranwendung (451) und der zweiten Benutzeranwendung (451, 551) zu empfangen.

4. Zugangsknoten (475, 575, 675) nach Anspruch 1,
(a) wobei der Zugangsknoten (475, 575, 675) dazu konfiguriert ist, Informationen über Fähigkeiten des Zugangsknotens (475, 575, 675) zur Kommunikation mit dem ersten Endknoten (455) an den ersten Endknoten zu senden; oder
(b) wobei der Zugangsknoten (475, 575, 675) dazu konfiguriert ist, Informationen über Fähigkeiten des Zugangsknotens (475, 575, 675) zur Kommunikation mit dem ersten Endknoten (455) an den ersten Endknoten zu senden, wobei die Informationen über Fähigkeiten des Zugangsknotens (475, 575, 675) zur Kommunikation Überlastungsinformationen enthalten.

5. Zugangsknoten (475, 575, 675) nach Anspruch 1,
(a) wobei das Transceiver-Modul (479) dazu konfiguriert ist, die zeitlich eingeplanten Downlink-Pakete an den ersten Endknoten (455) zusammen mit Charakteristiken zu übertragen, die das Timing der Übergabe des ersten Endknotens (455) an einen anderen Zugangsknoten beinhalten; oder
(b) wobei das Transceiver-Modul (479) dazu konfiguriert ist, die zeitlich geplanten Downlink-Pakete an den ersten Endknoten (455) zusammen mit Charakteristiken zu übertragen, die das Timing der Übergabe des ersten Endknotens (455) an einen anderen Zugangsknoten beinhalten, wobei die Charakteristiken Charakteristiken beinhalten, die die Qualität der Erfahrung für einen Benutzer des ersten Endknotens (455) verbessern.

6. Zugangsknoten (475, 575, 675) nach Anspruch 1, wobei das Transceiver-Modul (479) dazu konfiguriert ist, die zeitlich geplanten Downlink-Pakete an den ersten Endknoten (455) zusammen mit Charakteristiken zu übertragen, die mindestens teilweise auf historischen Überlastungsinformationen basieren, die mit vergangenen Kommunikationen zwischen dem Zugangsknoten (475, 575, 675) und dem ersten Endknoten (455) assoziiert sind.

7. Zugangsknoten (475, 575, 675) nach Anspruch 1,
(a) wobei die Zustandsinformationen über die erste Benutzeranwendung (451) Informationen beinhalten, die aus der Gruppe bestehend aus Informationen über die Belegung eines Video-Wiedergabepuffers im ersten Endknoten (455), Informationen über die Qualität eines an den ersten Endknoten (455) übertragenen Videos, Informationen zum Analysieren der Leistung eines Kommunikationsnetzes, das den Zugangsknoten (475, 575, 675) beinhaltet, und einer Schätzung der Audioqualität ausgewählt sind; oder
(b) wobei die erste Benutzeranwendung (451) eine Videoanwendung ist und wobei die Zustandsinformationen über die erste Benutzeranwendung (451) Hinweise auf Videostandbilder beinhalten; oder
(c) wobei die Zustandsinformationen über die erste Benutzeranwendung (451) einen Streaming-Status beinhalten, der aus der Gruppe bestehend aus einem anfänglichen Pufferzustand, einem Wiedergabezustand, einem Pausenzustand, einem gestoppten Zustand, einem Rückspulzustand und einem Schnellvorlaufzustand ausgewählt ist; oder
(d) wobei einige der Downlink-Pakete vom Anwendungsserver als Antwort auf eine Anforderung von dem ersten Endknoten (455) empfangen wurden, und wobei die Zustandsinformationen über die erste Benutzeranwendung (451) Informationen über einen Stimulus für die von dem ersten Endknoten (455) empfangene Anforderung beinhalten; oder
(e) wobei einige der Downlink-Pakete von dem Anwendungsserver als Antwort auf eine Anforderung von dem ersten Endknoten (455) empfangen wurden, und wobei die Zustandsinformationen über die erste Benutzeranwendung (451) Informationen über einen Stimulus für die von dem ersten Endknoten (455) empfangene Anforderung beinhalten, wobei die Informationen über den Stimulus darauf hinweisen, ob ein Benutzer auf eine Antwort auf die Anforderung wartet und wobei die Priorität des mindestens einen Scheduler-Parameters, der zum zeitlichen Einplanen von Kommunikationen, die mit der Anforderung assoziiert sind, erhöht wird, wenn der Benutzer wartet; oder
(f) wobei das Transceiver-Modul (479) ferner dazu konfiguriert ist, von dem ersten Endknoten (455) eine Anforderung für Daten von einem Anwendungsserver zu empfangen, wobei die Anforderung für mehrere Medien ist und wobei die Zustandsinformationen über die erste Benutzeranwendung (451) Hinweise auf relative Prioritäten der Medien beinhalten; oder
(g) wobei die erste Benutzeranwendung (451) eine Streaming-Anwendung ist und wobei die Zustandsinformationen über die erste Benutzeranwendung (451) Informationen über das Timing von Streaming-Ereignissen beinhalten, das Zahlen und Dauern von Verzögerungen beinhaltet; oder
(h) wobei die Zustandsinformationen über die erste Benutzeranwendung (451) Informationen über Handlungen von einem Benutzer des ersten Endknotens (455) beinhalten, die auf eine Unzufriedenheit mit der Kommunikationsleistung hinweisen; oder
(i) wobei die Zustandsinformationen über die erste Benutzeranwendung (451) eine Metrik der Service-Qualität auf Paketniveau beinhalten, die von dem ersten Endknoten (455) gemessen wird.

8. Zugangsknoten (475, 575, 675) nach Anspruch 1, der dazu konfiguriert ist, den mindestens einen Scheduler-Parameter einzustellen, um die Priorität der Kommunikationen zu dem ersten Endknoten (455) vor der Übergabe des ersten Endknotens (455) an einen anderen Zugangsknoten zu erhöhen.

9. Verfahren zum Betreiben eines Zugangsknotens (475, 575, 675), wobei der Zugangsknoten (475, 575, 675) dazu konfiguriert ist, Kommunikationen zwischen einem ersten Endknoten (455) und einem Anwendungsserver bereitzustellen, wobei das Verfahren Folgendes umfasst:
Empfangen von Zustandsinformationen über eine erste Benutzeranwendung (451), die am ersten Endknoten (455) gehostet wird, von dem ersten Endknoten (455), wobei die Zustandsinformationen von einem Anwendungsagentenmodul (470) in dem Zugangsknoten (475) über einen kooperativen Kommunikationssteuerungspfad (403) der ersten Anwendung und des Agenten, der zwischen dem Anwendungsagentenmodul (470) und der ersten Benutzeranwendung (451) etabliert ist, empfangen werden;
Modifizieren mindestens eines Scheduler-Parameters unter Verwendung der empfangenen Zustandsinformationen über die erste Benutzeranwendung (451);
Empfangen von Downlink-Paketen von dem Anwendungsserver über ein Backhaul-Modul (285) und Gruppieren der Downlink-Pakete in Warteschlangen; und
zeitliches Einplanen der Warteschlangen von Downlink-Paketen für eine Übertragung von dem Zugangsknoten (475) an den ersten Endknoten (455) basierend auf dem modifizierten mindestens einen Scheduler-Parameter.

10. Verfahren nach Anspruch 9,
(a) ferner umfassend Übertragen von Informationen über Fähigkeiten des Zugangsknotens (475) zur Kommunikation mit dem ersten Endknoten (455) an den ersten Endknoten (455); oder
(b) ferner umfassend Übertragen von Informationen über Fähigkeiten des Zugangsknotens (475) zur Kommunikation mit dem ersten Endknoten (455) an den ersten Endknoten, wobei die Informationen über Fähigkeiten des Zugangsknotens (475) zur Kommunikation Überlastungsinformationen beinhalten.

11. Verfahren nach Anspruch 9,
(a) wobei die Zustandsinformationen über die erste Benutzeranwendung (451) Informationen beinhalten, die aus der Gruppe bestehend aus Informationen über die Belegung eines Video-Wiedergabepuffers im ersten Endknoten (455), Informationen über die Qualität eines an den ersten Endknoten (455) übertragenen Videos, Informationen zum Analysieren der Leistung eines Kommunikationsnetzes, das den Zugangsknoten (475, 575, 675) beinhaltet, und einer Schätzung der Audioqualität ausgewählt sind; oder
(b) wobei die erste Benutzeranwendung (451) eine Videoanwendung ist und wobei die Zustandsinformationen über die erste Benutzeranwendung (451) Hinweise auf Videostandbilder beinhalten; oder
(c) wobei die Zustandsinformationen über die erste Benutzeranwendung (451) einen Streaming-Status beinhalten, der aus der Gruppe bestehend aus einem anfänglichen Pufferzustand, einem Wiedergabezustand, einem Pausenzustand, einem gestoppten Zustand, einem Rückspulzustand und einem Schnellvorlaufzustand ausgewählt ist; oder
(d) wobei einige der Downlink-Pakete vom Anwendungsserver als Antwort auf eine Anforderung von dem ersten Endknoten (455) empfangen wurden, und wobei die Zustandsinformationen über die erste Benutzeranwendung (451) Informationen über einen Stimulus für die von dem ersten Endknoten (455) empfangene Anforderung beinhalten; oder
(e) wobei einige der Downlink-Pakete von dem Anwendungsserver als Antwort auf eine Anforderung von dem ersten Endknoten (455) empfangen wurden, und wobei die Zustandsinformationen über die erste Benutzeranwendung (451) Informationen über einen Stimulus für die von dem ersten Endknoten (455) empfangene Anforderung beinhalten, wobei die Informationen über den Stimulus darauf hinweisen, ob ein Benutzer auf eine Antwort auf die Anforderung wartet und wobei die Priorität des mindestens einen Scheduler-Parameters, der zum zeitlichen Einplanen von Kommunikationen, die mit der Anforderung assoziiert sind, erhöht wird, wenn der Benutzer wartet; oder
(f) ferner umfassend Empfangen einer Anforderung für Daten von dem Anwendungsserver von dem ersten Endknoten (455), wobei die Anforderung für mehrere Medien ist und wobei die Zustandsinformationen über die erste Benutzeranwendung (451) Hinweise auf relative Prioritäten der Medien beinhalten; oder
(g) wobei die erste Benutzeranwendung (451) eine Streaming-Anwendung ist und wobei die Zustandsinformationen über die erste Benutzeranwendung (451) Informationen über das Timing von Streaming-Ereignissen beinhaltet, das Zahlen und Dauern von Verzögerungen beinhaltet; oder
(h) wobei die Zustandsinformationen über die erste Benutzeranwendung (451) Informationen über Handlungen von einem Benutzer des ersten Endknotens (455) beinhalten, die auf eine Unzufriedenheit mit der Kommunikationsleistung hinweisen; oder
(i) wobei die Zustandsinformationen über die erste Benutzeranwendung (451) eine Metrik der Service-Qualität auf Paketniveau beinhalten, die von dem ersten Endknoten (455) gemessen wird.

12. Verfahren nach Anspruch 9,
(a) wobei der Zugangsknoten (475) die zeitlich geplanten Warteschlangen der Downlink-Pakete an den ersten Endknoten (455) überträgt, wobei die Downlink-Pakete zusammen mit Charakteristiken übertragen werden, die die Zustandsinformationen über die erste Benutzeranwendung (451) nutzen; oder
(b) wobei der Zugangsknoten (475) die zeitlich geplanten Warteschlangen von Downlink-Paketen an den ersten Endknoten (455) überträgt, wobei die Downlink-Pakete zusammen mit Charakteristiken übertragen werden, die die Zustandsinformationen über die erste Benutzeranwendung (451) nutzen, wobei die Charakteristiken ein Timing einer Übergabe des ersten Endknotens (455) an einen anderen Zugangsknoten beinhalten; oder
(c) wobei der Zugangsknoten (475) die zeitlich geplanten Warteschlangen der Downlink-Pakete an den ersten Endknoten (455) überträgt, wobei die Downlink-Pakete zusammen mit Charakteristiken übertragen werden, die die Zustandsinformationen über die erste Benutzeranwendung (451) nutzen, wobei die Charakteristiken Charakteristiken beinhalten, die die Qualität der Erfahrung für einen Benutzer des ersten Endknotens (455) verbessern.

13. Verfahren nach Anspruch 9, wobei der mindestens eine Scheduler-Parameter eingestellt ist, um die Priorität der Kommunikationen mit dem ersten Endknoten (455) vor der Übergabe des ersten Endknotens (455) an einen anderen Zugangsknoten zu erhöhen.

14. Verfahren nach Anspruch 9,
(a) ferner umfassend Festlegen einer Zulassungssteuerungsantwort unter Nutzung der Zustandsinformationen über die erste Benutzeranwendung (451); oder
(b) ferner umfassend Festlegen einer Zulassungssteuerungsantwort unter Nutzung der Zustandsinformationen über die erste Benutzeranwendung (451), wobei die Zulassungssteuerungsantwort als Antwort auf eine Zulassungsanforderung von dem ersten Endknoten (455) festgelegt wird, wobei die Zulassungsanforderung einen Hinweis auf mehrere Formate enthält, die in einer Sitzung verwendet werden können, die mit der Zulassungsanforderung assoziiert ist, und wobei die Zulassungsteuerungsantwort Hinweise beinhaltet, welche der Formate gegebenenfalls innerhalb der Grenzen der aktuellen Schätzungen der verfügbaren Ressourcen für Kommunikationen mit dem ersten Endknoten (455) liegen.

15. Verfahren nach Anspruch 9, ferner umfassend Beibehalten historischer Überlastungsinformationen, die mit Kommunikationen zwischen dem Zugangsknoten (475) und dem ersten Endknoten (455) assoziiert sind, und wobei die zeitlich geplanten Warteschlangen von Downlink-Paketen an den ersten Endknoten (455) zusammen mit weiteren Charakteristiken übertragen werden, die mindestens teilweise auf den historischen Überlastungsinformationen basieren.

16. Verfahren nach Anspruch 9, wobei die Zustandsinformationen über die erste Benutzeranwendung (451) von dem ersten Endknoten (455) über ein drittes Gerät an den Zugangsknoten (475) weitergeleitet werden und wobei das dritte Gerät die Zustandsinformationen vor dem Weiterleiten der Zustandsinformationen an den Zugangsknoten (475) verarbeitet.

17. Verfahren nach Anspruch 9, wobei das Anwendungsagentenmodul (470) ein Master-Agentenmodul und eine Vielzahl von spezifischen Anwendungsagentenmodulen (671(1)-671(n)) beinhaltet, und
wobei eines der Vielzahl von spezifischen Anwendungsagentenmodulen die Zustandsinformationen über die erste Benutzeranwendung (451) über das Master-Agentenmodul empfängt und ein anderes der Vielzahl von spezifischen Anwendungsagentenmodulen Informationen über eine andere Anwendung über das Master-Agentenmodul empfängt.

## Revendications

1. Noeud d'accès (475) comprenant :
un module émetteur-récepteur (479) configuré pour communiquer avec un premier noeud terminal (455) qui héberge une première application utilisateur (451) ;
un module de liaison (285) configuré pour fournir des communications avec un serveur d'application ;
un module d'agent d'application (470) qui est associé à la première application utilisateur (451) et qui est configuré pour recevoir des informations d'état concernant la première application utilisateur (451) provenant du premier noeud terminal (455) par l'intermédiaire d'un chemin de contrôle de communication coopérative première application-agent établi (403) entre le module d'agent d'application (470) et la première application (455) utilisateur ;
un module de calcul de paramètre planificateur (484) configuré pour modifier au moins un paramètre planificateur utilisant les informations d'état reçues concernant la première application utilisateur (451) ; et
un module planificateur (430) configuré pour recevoir des paquets en liaison descendante par l'intermédiaire du module de liaison (285) pour grouper les paquets en liaison descendante en des files d'attente, et planifier les paquets en liaison descendante pour une transmission par le module émetteur-récepteur (479) utilisant l'au moins un paramètre planificateur modifié.

2. Noeud d'accès (475) selon la revendication 1,
(a) comprenant en outre un module de réponse de contrôle d'admission (483) configuré pour recevoir une demande d'admission provenant du premier noeud terminal (455) et pour déterminer une réponse de contrôle d'admission utilisant les informations d'état concernant la première application utilisateur (451) ; ou
(b) comprenant en outre un module de réponse de contrôle d'admission (483) configuré pour recevoir une demande d'admission provenant du premier noeud terminal (455) et pour déterminer une réponse de contrôle d'admission utilisant les informations d'état concernant la première application utilisateur, dans lequel la demande d'admission comprend une indication de formats multiples pouvant être utilisés dans une session associée à une demande d'admission, et dans lequel la réponse de contrôle d'admission comprend des indications sur les formats qui, le cas échéant, se trouvent dans les limites des estimations actuelles de ressources disponibles pour des communications avec le premier noeud terminal (455).

3. Noeud d'accès (575, 675) selon la revendication 1, dans lequel :
le module émetteur-récepteur (479) est configuré en outre pour communiquer avec un deuxième noeud terminal (455, 555) qui héberge une deuxième application utilisateur (451, 551) ; et
le module d'agent d'application (475) est configuré en outre pour établir un chemin de contrôle de communication coopérative deuxième application-agent (403, 503) entre le module d'agent d'application (470) et la deuxième application utilisateur (451, 551), et le module d'agent d'application (470) comprend
un module d'agent d'application maître (670) qui est associé à la première application utilisateur (451) et à la deuxième application utilisateur (455, 555) et qui est configuré pour recevoir les informations d'état concernant la première application utilisateur (451) et la deuxième application utilisateur (451, 551) et pour traiter une première partie des informations d'état qui est commune à la fois à la première application utilisateur (451) et à la deuxième application utilisateur (451, 551), et
au moins un module d'agent d'application spécifique (671(1) - 671(n)) qui est couplé au module d'agent d'application maître (670) et qui est configuré pour recevoir au moins plusieurs des informations d'état concernant une ou plusieurs applications parmi la première application utilisateur (451) et la deuxième application utilisateur (451, 551).

4. Noeud d'accès (475, 575, 675) selon la revendication 1,
(a) dans lequel le noeud d'accès (475, 575, 675) est configuré pour transmettre au premier noeud terminal des informations concernant les capacités du noeud d'accès (475, 575, 675) pour une communication avec le premier noeud terminal (455) ; ou
(b) dans lequel le noeud d'accès (475, 575, 675) est configuré pour transmettre au premier noeud terminal des informations concernant des capacités du noeud d'accès (475, 575, 675) pour une communication avec le premier noeud terminal (455), dans lequel les informations concernant des capacités du noeud d'accès (475, 575, 675) pour une communication comprend des informations de congestion.

5. Noeud d'accès (475, 575, 675) selon la revendication 1,
(a) dans lequel le module émetteur-récepteur (479) est configuré pour transmettre les paquets en liaison descendante planifiés au premier noeud terminal (455) accompagnés des caractéristiques qui comprennent le moment du transfert du premier noeud terminal (455) à un autre noeud d'accès ; ou
(b) dans lequel le module émetteur-récepteur (479) est configuré pour transmettre les paquets en liaison descendante planifiés au premier noeud terminal (455) accompagnés des caractéristiques qui comprennent le moment de transfert du premier noeud terminal (455) à un autre noeud d'accès, dans lequel les caractéristiques comprennent des caractéristiques qui améliorent la qualité de l'expérience d'un utilisateur du premier noeud terminal (455).

6. Noeud d'accès (475, 575, 675) selon la revendication 1, dans lequel le module émetteur-récepteur (479) est configuré pour transmettre les paquets en liaison descendante planifiés au premier noeud terminal (455) accompagnés des caractéristiques qui se basent au moins en partie sur un historique d'informations de congestion associées à des communications passées entre le noeud d'accès (475, 575, 675) et le premier noeud terminal (455).

7. Noeud d'accès (475, 575, 675) selon la revendication 1,
(a) dans lequel les informations d'état concernant la première application utilisateur (451) comprennent des informations choisies parmi le groupe comprenant des informations concernant l'occupation d'un tampon de lecture vidéo dans le premier noeud terminal (455), des informations concernant la qualité d'une vidéo transmise au premier noeud terminal (455), des informations pour analyser la performance d'un réseau de communication qui comprend le noeud d'accès (475, 575, 675), et une estimation de la qualité audio ; ou
(b) dans lequel la première application utilisateur (451) est une application vidéo, et dans lequel les informations d'état concernant la première application utilisateur (451) comprennent des indications d'arrêts sur image ; ou
(c) dans lequel les informations d'état concernant la première application utilisateur (451) comprennent un statut de flux choisi parmi le groupe comprenant un état de mise en tampon initial, un état de lecture, un état en pause, un état arrêté, un état de rembobinage et un état d'avance rapide ; ou
(d) dans lequel certains des paquets en liaison descendante sont reçus depuis le serveur d'application en réponse à une demande provenant du premier noeud terminal (455), et dans lequel les informations d'état concernant la première application utilisateur (451) comprennent des informations sur une relance pour la requête reçue depuis le premier noeud terminal (455) ; ou
(e) dans lequel certains des paquets en liaison descendante sont reçus depuis le serveur d'application en réponse à une demande provenant du premier noeud terminal (455), et dans lequel les informations d'état concernant la première application utilisateur (451) comprennent des informations concernant une relance pour la requête reçue depuis le premier noeud terminal (455), dans lequel les informations concernant la relance indiquent si un utilisateur attend une réponse à la demande, et dans lequel la priorité de l'au moins un paramètre planificateur utilisé pour planifier des communications associées à la requête remonte à un niveau supérieur quand l'utilisateur attend ; ou
(f) dans lequel le module émetteur-récepteur (479) est en outre configuré pour recevoir, depuis le premier noeud terminal (455), une demande pour des données provenant d'un serveur d'application, dans lequel la demande est pour des médias multiples, et dans lequel les informations d'état concernant la première application utilisateur (451) comprennent des indications des priorités relatives des médias ; ou
(g) dans lequel la première application utilisateur (451) est une application de diffusion en continu, et dans lequel les informations d'état concernant la première application utilisateur (451) comprennent des informations concernant le moment des événements de diffusion en continu qui comprend des nombres et durées de décrochages ; ou
(h) dans lequel les informations d'état concernant la première application utilisateur (451) comprennent des informations concernant des actions d'un utilisateur du premier noeud terminal (455) qui indiquent l'insatisfaction avec la performance des communications ; ou
(i) dans lequel les informations d'état concernant la première application utilisateur (451) comprennent une qualité au niveau du paquet de service mesurée par le premier noeud terminal (455).

8. Noeud d'accès (475, 575, 675) selon la revendication 1, configuré pour paramétrer l'au moins un paramètre planificateur pour remonter à un niveau supérieur la priorité de communications avec le premier noeud terminal (455) avant le transfert du premier noeud terminal (455) à un autre noeud d'accès.

9. Procédé de fonctionnement d'un noeud d'accès (475, 575, 675), le noeud d'accès (475, 575, 675) étant configuré pour fournir des communications entre un premier noeud terminal (455) et un serveur d'application, le procédé comprenant :
la réception, depuis le premier noeud terminal (455), d'informations d'état concernant une première application utilisateur (451) hébergée au niveau du premier noeud terminal (455), les informations d'état étant reçues par un module d'agent d'application (470) dans le noeud d'accès (475) par l'intermédiaire d'un chemin de contrôle de communication coopérative première application-agent (403) établi entre le module d'agent d'application (470) et la première application utilisateur (451) ;
la modification d'au moins un paramètre planificateur utilisant les informations d'état reçues concernant la première application utilisateur (451) ;
la réception de paquets en liaison descendante depuis le serveur d'application par l'intermédiaire d'un module de liaison (285) et le regroupement de paquets en liaison descendante en des files d'attente ; et
la planification des files d'attente de paquets en liaison descendante pour la transmission depuis le noeud d'accès (475) vers le premier noeud terminal (455) sur la base de l'au moins un paramètre planificateur modifié.

10. Procédé selon la revendication 9,
(a) comprenant en outre la transmission au premier noeud terminal (455) d'informations concernant des capacités du noeud d'accès (475) pour une communication avec le premier noeud terminal (455) ; ou
(b) comprenant en outre la transmission au premier noeud terminal d'informations concernant des capacités du noeud d'accès (475) pour une communication avec le premier noeud terminal (455), dans lequel les informations concernant des capacités du noeud d'accès (475) pour une communication comprennent des informations de congestion.

11. Procédé selon la revendication 9,
(a) dans lequel les informations d'état concernant la première application utilisateur (451) comprennent des informations choisies parmi le groupe comprenant des informations concernant l'occupation d'un tampon de lecture vidéo dans le premier noeud terminal (455), des informations concernant la qualité d'une vidéo transmise au premier noeud terminal (455), des informations pour analyser la performance d'un réseau de communications qui comprend le noeud d'accès (475, 575, 675), et une estimation de la qualité audio ; ou
(b) dans lequel la première application utilisateur (451) est une application vidéo, et dans lequel les informations d'état concernant la première application utilisateur (451) comprennent des indications d'arrêts sur image ; ou
(c) dans lequel les informations d'état concernant la première application utilisateur (451) comprennent un statut de diffusion en continu choisi parmi le groupe comprenant un état de mise en tampon initial, un état de lecture, un état en pause, un état arrêté, un état de rembobinage et un état d'avance rapide ; ou
(d) dans lequel certains des paquets en liaison descendante sont reçus depuis le serveur d'application en réponse à une demande provenant du premier noeud terminal (455) ; et dans lequel les informations d'état concernant la première application utilisateur (451) comprennent des informations concernant une relance pour la demande reçue depuis le premier noeud terminal (455) ; ou
(e) dans lequel certains des paquets en liaison descendante sont reçus depuis le serveur d'application en réponse à une demande provenant du premier noeud terminal (455), et dans lequel les informations d'état concernant la première application utilisateur (451) comprennent des informations concernant une relance pour la requête reçue depuis le premier noeud terminal (455), dans lequel les informations concernant la relance indiquent si un utilisateur attend une réponse à la demande, et dans lequel la priorité de l'au moins un paramètre planificateur utilisé pour planifier des communications associées à la demande est remontée à un niveau supérieur quand l'utilisateur attend ; ou
(f) comprenant en outre la réception, depuis le premier noeud terminal (455), d'une requête pour des données provenant du serveur d'application, dans lequel la requête est pour des médias multiples, et dans lequel les informations d'état concernant la première application utilisateur (451) comprennent des indications de priorités relatives des médias ; ou
(g) dans lequel la première application utilisateur (451) est une application de diffusion en continu, et dans lequel les informations d'état concernant la première application utilisateur (451) comprennent des informations concernant le moment d'événements de diffusion en continu qui comprennent les nombres et durées de décrochages ; ou
(h) dans lequel les informations d'état concernant la première application utilisateur (451) comprennent des informations concernant des actions d'un utilisateur du premier noeud terminal (455) qui indiquent l'insatisfaction avec la performance de communications ; ou
(i) dans lequel les informations d'état concernant la première application utilisateur (451) comprennent une qualité au niveau de paquet de service mesurée par le premier noeud terminal (455).

12. Procédé selon la revendication 9,
(a) dans lequel le noeud d'accès (475) transmet les files d'attente planifiées de paquets en liaison descendante au premier noeud terminal (455), les paquets en liaison descendante étant transmis accompagnés de caractéristiques qui utilisent les informations d'état concernant la première application utilisateur (451) ; ou
(b) dans lequel le noeud d'accès (475) transmet les files d'attente planifiées de paquets en liaison descendante au premier noeud terminal (455), les paquets en liaison descendante étant transmis accompagnés de caractéristiques qui utilisent les informations d'état concernant la première application utilisateur (451), dans lequel les caractéristiques comprennent le temps d'un transfert du premier noeud terminal (455) à un autre noeud d'accès ; ou
(c) dans lequel le noeud d'accès (475) transmet les files d'attente planifiées de paquets en liaison descendante au premier noeud terminal (455), les paquets en liaison descendante étant transmis accompagnés de caractéristiques qui utilisent les informations d'état concernant la première application utilisateur (451), dans lequel les caractéristiques comprennent des caractéristiques qui améliorent la qualité de l'expérience d'un utilisateur du premier noeud terminal (455).

13. Procédé selon la revendication 9, dans lequel l'au moins un paramètre planificateur est paramétré pour remonter à un niveau supérieur la priorité de communications avec le premier noeud terminal (455) avant le transfert du premier noeud terminal (455) à un autre noeud d'accès.

14. Procédé selon la revendication 9,
(a) comprenant en outre la détermination d'une réponse de contrôle d'admission utilisant les informations d'état concernant la première application utilisateur (451) ; ou
(b) comprenant en outre la détermination d'une réponse de contrôle d'admission utilisant les informations d'état concernant la première application utilisateur (451), dans lequel la réponse de contrôle d'admission est déterminée en réponse à une demande d'admission provenant du premier noeud terminal (455), dans lequel la demande d'admission comprend une indication de formats multiples qui peuvent être utilisés dans une session associée à la demande d'admission, et dans lequel la réponse de contrôle d'admission comprend des indications sur les formats qui, le cas échéant, se situent dans les limites d'estimations actuelles de ressources disponibles pour des communications avec le premier noeud terminal (455).

15. Procédé selon la revendication 9, comprenant en outre le maintien de l'historique d'informations de congestion associées à des communications entre le noeud d'accès (475) et le premier noeud terminal (455), et dans lequel les files d'attente planifiées de paquets en liaison descendante sont transmises au premier noeud terminal (455) accompagnées d'autres caractéristiques qui sont basées au moins sur des parties de l'historique des informations de congestion.

16. Procédé selon la revendication 9, dans lequel les informations d'état concernant la première application utilisateur (451) sont relayées depuis le premier noeud terminal (455) au noeud d'accès (475) par l'intermédiaire d'un troisième dispositif, et dans lequel le troisième dispositif traite les informations d'état avant de relayer les informations d'état au noeud d'accès (475).

17. Procédé selon la revendication 9, dans lequel le module d'agent d'application (470) comprend un module d'agent maître et une pluralité de modules d'agent d'application spécifiques (671(1) - 671(n)), et
dans lequel un module de la pluralité de modules d'agent d'application spécifiques reçoit les informations d'état concernant la première application utilisateur (451) par l'intermédiaire du module d'agent maître et un autre module de la pluralité de modules d'agent d'application spécifiques reçoit des informations concernant une autre application par l'intermédiaire du module d'agent maître.
